(19) Europäisches Patentamt / European Patent Office / Office européen des brevets

(11) EP 2 795 415 B1

## (12) EUROPEAN PATENT SPECIFICATION

(45) Date of publication and mention
of the grant of the patent:
**14.06.2017 Bulletin 2017/24**

(21) Application number: **12816483.7**

(22) Date of filing: **21.12.2012**

(51) Int Cl.:
***G05B 23/02*** (2006.01)

(86) International application number:
**PCT/FI2012/051287**

(87) International publication number:
**WO 2013/093207 (27.06.2013 Gazette 2013/26)**

(54) **A METHOD FOR DETECTING FAULTS IN A FLOW NETWORK CONTROLLED BY VALVES OR IN A PART OF IT**

VERFAHREN ZUR FEHLERERKENNUNG IN EINEM DURCH VENTILE GESTEUERTEN STRÖMUNGSNETZWERK ODER EINEM TEIL DAVON

PROCÉDÉ DE DÉTECTION DE DÉFAUTS DANS UN RÉSEAU D'ÉCOULEMENT COMMANDÉ PAR DES VANNES OU DANS UNE PARTIE DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2011 FI 20116321**

(43) Date of publication of application:
**29.10.2014 Bulletin 2014/44**

(73) Proprietor: **Aalto-korkeakoulusäätiö**
**00076 Espoo (FI)**

(72) Inventor: **ZAKHAROV, Alexey**
**FI-00076 Aalto (FI)**

(74) Representative: **Berggren Oy, Helsinki & Oulu**
**P.O. Box 16**
**Eteläinen Rautatiekatu 10A**
**00101 Helsinki (FI)**

(56) References cited:
**US-A1- 2003 147 351** **US-A1- 2008 071 394**

- **HUI CHENG ET AL: "Application of the Enhanced Dynamic Causal Digraph Method on a Three-Layer Board Machine", IEEE TRANSACTIONS ON CONTROL SYSTEMS TECHNOLOGY, vol. 19, no. 3, 1 May 2011 (2011-05-01), pages 644-655, XP055057244, ISSN: 1063-6536, DOI: 10.1109/TCST.2010.2051441**
- **LAUER F ET AL: "Méthodes SVM pour l'identification", INTERNET CITATION, 27 October 2006 (2006-10-27), XP007905185, Retrieved from the Internet: URL:http://hal.archives-ouvertes.fr/docs/0 0/11/03/44/PDF/LauerBlochJIME06.pdf [retrieved on 2013-04-23]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the invention

The invention relates to a method for detecting faults in a flow network controlled by valves or in a part of it according to preamble of claim 1.

The invention relates also to a method for controlling and/or optimizing of a flow network controlled by valves or a part of it according to preamble of claim 8.

### Prior Art

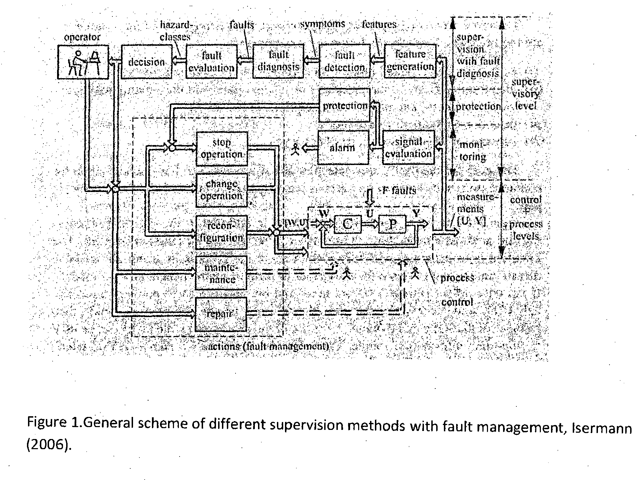

According to Isermann (2006), a fault is an unexpected deviation of at least one characteristic property of the system from the acceptable, usual, standard conditions. The fault treatment, which is presented in Figure 1, includes the following actions:

- *the process shutdown*, which is usually used if there is a danger for the process or the environment
- *reliable operation* at the new operational conditions, usually at the lower load, speed, pressure, temperature, etc.
- *reconfiguration* is using other sensors, actuators or redundant components in order to keep the process conditions unchanged
- *maintenance,* which means replacement of the faulty component at the first possibility

Development and implementation of both the model-based and the data-based fault detection methods is carried out off-line. The data-based methods use the process data to characterize the process behavior in a certain form (for example, to carry out some principal component analysis, to train a neural network or a self-organizing map). The theoretical physical-chemical process models are rarely available, therefore the model-based methods often rely on the process models identified from available process data and the identification task is usually carried out off-line. The process models are never absolutely accurate and the fault detection thresholds are designed to reject the model inaccuracies and the process disturbances. The fault detection thresholds are selected in order to achieve a reasonable compromise between the false alarms and the missed alarms rates. However, improving model accuracy allows to decrease the detection thresholds and to decrease the missed alarms rate while keeping the false alarms rate constant. In addition, fault diagnosis algorithms, such as a classifier or a set of structured or directional residuals, are also developed off-line.

In on-line, a fault is detected if the current process data is inconsistent with the process model (or does not fit to the characterization of the process behavior). If a fault is detected, the diagnosis algorithms are used to find the location of the fault.

Table 1 presents the typical issues concerning industrial processes from the point of view of fault detection and diagnosis of the said processes.

Table1. The typical issues of nonlinear processes from FDD point of view

| | |
|---|---|
| 1. | The physical-chemical model of a process is unavailable |
| 2. | Potential faults in a process are numerous and the fault effects are unknown |
| 3. | Faulty data is unavailable or the number of fault examples is very limited |
| 4. | A structure of the process describing the relations between the variables is available |
| 5. | The nonlinearities related to the most of devices commonly used in chemical industry typically involve not more than three variables. For example, the flow through a valve can be often described as a nonlinear function of two process variables: the degree of valve opening and the pressure drop at this valve. |

Due to the first issue of table 1, the data-based FDD methods are frequently selected, such as PCA and PLS, which are proven to be effective in detection of faults in linear processes. Among the non-linear fault detection methods, the bottle-neck neural networks and the input-training networks are used to carry out non-linear PCA analysis. In addition, the fault detection methods employ the neural networks to identify process models in many other ways. Alternatively, kernel PCA applies a non-linear transformation to the input set of process variables in order to map it to a subspace of a higher dimensional space. Furthermore, the process knowledge can be used to derive transformed variables which can be combined together with the original process variables to enable PCA to describe process nonlinearity. Even though PCA including the transformed variables can be used to incorporate a part of the process knowledge, the development of FDD algorithms for this method exploits the human experts very intensively.

Under issues 2, 3 and 4, one of most suitable fault diagnosis methods is the structured residual approach. In other words, each model equation involves some process variables and, therefore, its error is sensitive to some faults and insensitive to the others. The pattern of the current values of the errors of the model equations can be used to distinguish faults and diagnose the fault location using the residuals-fault incidence matrix. In contrast, other diagnosis methods require fault modeling or sufficient amount of both faulty and healthy data which is normally an infeasible requirement (issues 2 and 3 in Table 1).

In brief, obtaining of an accurate and reliable process model is a key step in implementation of fault detection and diagnosis (FDD) of industrial processes and some other tasks. Most of the known methods identifying a process model from the available process data result in linear models, and therefore, these models cannot describe satisfactory highly-nonlinear processes. Simultaneously, the existing non-linear methods suffer from overfitting which degrades the model accuracies. In addition, the parameters of the non-linear models identified from process data frequently do not have any physical interpretation (black box models). To conclude, implementing of FDD of industrial processes and some other important tasks needs a method for nonlinear identification of process models providing maximum accuracy and transparency of the resulting models.

**Description of the invention**

**General description**

None of the nonlinear methods mentioned above can take into account the structure of common nonlinearities in industrial processes, such as flow networks.

Therefore the first objective of the invention is to propose a new method for identification of nonlinear model for a flow network controlled by valves incorporating common properties of the said flow networks. In addition, the method to identify a model must be suitable to describe nonlinearities related to most common devices used in industry, such as valves, pumps, pipes, tanks, chemical reactors and basic combinations of said devices.

The second objective of the invention is to achieve a new method for identifying a nonlinear model of a flow network controlled by valves suitable for fault detection and diagnosis of fault location. The method would take into account the aspects and issues presented in table 1 and thus to get rid of inconveniences in the above mentioned prior art.

The third objective of the invention is to propose a new method to increase the reliability of the nonlinear models, identified according to objective 1 and 2, under the operational conditions unexplored by the data used to identify the models.

The fourth objective of the invention is to propose a fault detection and diagnosis method based on the new nonlinear model identification method. The method should allow a decrease in the fault detection thresholds while keeping the false alarms probability constant.

The fifth objective of the invention is to demonstrate the suitability of the proposed new method for identification of models to flow networks controlled by valves, which are the most common actuator in the chemical industry. The flow through a valve can be described by a low-dimensional nonlinear function (the said nonlinear function typically needs two or three inputs, such as the degree of valve opening and the pressures before and after the valve or the pressure difference).

The sixth objective of the invention is to apply the nonlinear model identification method referred in objective 1 to an industrial flow network data and test the fault detection and diagnosis method referred in objective 4 on the same flow network.

The invention relates to a method according to claim 1 for detecting faults in a flow network controlled by valves or in a part of it, wherein said flow network is nonlinear in regard to at least one process variable, wherein the method comprises at least the following steps:

- for identifying the structure of said nonlinear flow network is used at least one model equation which contains at least one function selected from the group comprising linear function(s) of the process variable(s) or/and variable(s) derived therefrom and nonlinear function(s), involving up to three process variables or/and variables derived therefrom, which are inputs of said nonlinear function(s), provided that at least one of said model equation(s) contains at least one said nonlinear function,
  wherein some or all or none of the coefficients of the said linear function(s) can be fixed wherein each nonlinear function may be involved into more than one model equation and wherein each nonlinear function is defined as weighted sum of products of basis functions of its input(s), wherein said weights of products are the coefficients defining the nonlinear function(s) and wherein a set of basis functions is selected for each input of said nonlinear function(s) before the identification of model equation(s),

- imposing the conditions on some or all or none of the nonlinear functions involved in said model equation(s) to monotonously increase or decrease with respect to some or all input(s) of said nonlinear function(s), and said conditions are converted to the constraints imposed on said coefficients defining said nonlinear function(s),

- imposing the conditions on some or all or none of the signs of the coefficients of the linear function(s) involved to said model equation(s)

- collecting measured values for all process variable(s) and computing the values of all variable(s) derived therefrom, involved to the model equation(s) for achieving a set of data samples, wherein each data sample is a collection of values of all said process variable(s) or/and of variable(s) derived therefrom at a fixed moment, wherein this step may also include some data preprocessing,

- identifying the model equation(s) which means defining the coefficients of said linear function(s) and the coefficients defining the nonlinear function(s), by minimizing the errors of the model equation(s) at every data sample while taking into account the flattening of said model equations(s), whereby the errors to be minimized in said model equation(s) are defined by substituting the values of the process variable(s) or/and variable(s) derived therefrom to the equation(s), wherein the flattening of model equation(s) is achieved by minimizing the sum of total curvatures of the said nonlinear function(s) taken with nonnegative weights, wherein said minimization of the errors of the model equation(s) together with the said sum of total curvatures is performed under the said constraints imposed both on the coefficients defining said nonlinear function(s) which represent the monotonousness conditions for said nonlinear function(s) with respect to their input(s) and on the signs of the coefficients of the linear function(s) involved to said model equation(s),

- selecting the fault detection thresholds for at least one identified model equation,

- computing the errors of said identified model equation(s) by substituting the current values of the process variables or variables derived therefrom to the said equation(s),

- evaluating said errors of the identified model equation(s) against the respective fault detection thresholds, and detecting faults in the flow network or in a part of it.

The input of a nonlinear function means herein a process variable or a variable derived therefrom, which is involved to the nonlinear function.

The flow network controlled by valves means herein a flow network which contains vessels and/or some sections called units and/or other equipment to store materials that are interconnected by piping and/or other material-moving equipment which can carry streams of material, wherein said material streams can include gas, liquid, solids or mixtures such as slurries, wherein the network may also include other devices such as pipes, pumps, tanks and chemical reactors.

The basis function means herein a function used to define the nonlinear functions involved to the model equation(s). Namely, every function of a variable can be approximated as a weighted sum of the basis functions related to this variable. As to meaning of term "basis function" we refer herein to literature at this field, for example www.wikipedia.org.

The basis functions related to each input of the nonlinear functions involved to the model equations are selected before identification of the model coefficients. As an example, the piecewise linear functions and the piecewise quadratic functions are the basis functions. However, the basis functions can be selected in many other ways resulting in models with comparable accuracies and properties.

The said data preprocessing may include the standard steps, such as removing delay between the variables, removing outliers in the values of the variables, filtering the values of the variables, etc.

The flattening effect is achieved by considering the total curvatures of the nonlinear functions involved to the model equation(s). Said total curvatures are composed of the local curvatures, which take small positive values at the conditions where the model discovers locally nonlinear behavior and take zero value otherwise. As the result, this technique allows to achieve high reliability of the identified process model even under operational conditions unexplored by the data, which is used to identify the model. The unexplored operational conditions means herein the operational conditions uncovered by the process data used to identify the model equations.

The evaluation of the said errors of the identified model equation(s) against the respective fault detection thresholds can be carried out, for example, using simple limit checking method or cumulative sum test (CUSUM).

Incorporating common properties of the flow networks controlled by valves to the process model improves its accuracy. The above fault detection method in a flow network will result in ability of the FDD system to detect faults quickly and enables recognition of the small magnitude faults. Furthermore, the physical-chemical models of the flow network are not used by the proposed method (property 1 of Table 1), and the properties 4 and 5 given in table 1 are also taken into account (the structure of the relationship between the variables is available and the basic nonlinearities between process variables normally involve not more than three variables).

The method for diagnosing the fault location is based on the standard structured residuals approach. In other words, each model equation involves some process variables and, therefore, its error is sensitive to some faults and insensitive to the others. The pattern of the current values of the errors of the model equations can be used to distinguish faults and diagnose the fault location using the residuals-fault incidence matrix. In contrast, other diagnosis methods require fault modeling or sufficient amount of both faulty and healthy data which is normally an infeasible requirement (issues 2 and 3 in Table 1). Therefore, the proposed method achieves objective 2.

One important embodiment of the present invention relates to a method for detecting faults, diagnosing the fault location and/or correcting the effects of the faults in a flow network with chemical reaction(s) or a part of it, wherein said flow network with chemical reaction(s) is nonlinear in regard to at least one process variable, wherein the model equations relate to the mass balances, the energy balances and the rates of chemical reactions, wherein some or all or none of the coefficients of the said linear functions can be fixed according to the mass balances, the energy balances or other physical or chemical phenomenas in said flow network with chemical reaction(s), wherein

- the model equation(s) related to the mass balances are composed of linear functions which in particular represent the flow measurements, variables reflecting the rate of change of the mass of substance in tanks involved to said flow network with chemical reaction(s), and the nonlinear functions which in particular represent flows through process devises, such as valves and pumps, and/or combinations thereof,

- the model equation(s) related to the energy balances are composed of linear functions which in particular represent the energy flow(s), variables reflecting the rate of change of the energy accumulated in the tanks involved to said flow network with chemical reaction(s), and the nonlinear functions which in particular represent the energy released/consumed by the chemical reactions and heat exchange phenomena in said flow network with chemical reaction(s),

- the model equation(s) related to speed of chemical reactions are composed of linear functions which represent the concentrations and/or flows of chemical compounds and the nonlinear functions, representing various chemical reactors, wherein the inputs of a nonlinear function are selected among the properties of the inlet flows to the reactor, pressure and temperature in the said reactor, and the residence time of the substance in the reactor or/and variables derived therefrom.

The flow network with chemical reaction(s) means herein a flow network controlled by valves in which chemical reaction(s) take place transforming the feed flows to the network to the outflows called final products.

One important embodiment of the present invention relates to the model equations representing mass balances of different parts of the flow network. The non-linear functions involved to said model equations correspond to the valves, the value of a nonlinear function involved to the model equations represent the flow through the related valve. The inputs of a nonlinear function are the degree of opening of the respective valve and the pressure before and after the respective valve or variables derived therefrom. Furthermore, the monotonousness conditions are imposed on the nonlinear functions according to general properties of valves, in particular the flow through a valve is increasing with respect to the degree of valve opening and the pressure before the valve, and the flow is decreasing with respect to the pressure after the valve. The linear functions involved to the model equations represent the flow measurements and/or derivatives of the tank levels and/or variables reflecting the amount of the chemical substance in tanks involved to the flow network. Example 1 presents the embodiment of the method for a steam-water network controlled by valves, which is a part of the drying section of a board machine. Therefore objective 5 is achieved.

Advantageously the invention relates to a method wherein model equation or a set of model equations is/are of general formula (1):

$$\sum_{i=1}^{k} a_i x_i + \sum_{i=1}^{l} F_i^1(x_i^1) + \sum_{i=1}^{m} F_i^2(x_i^2, y_i^2) + \sum_{i=1}^{n} F_i^3(x_i^3, y_i^3, z_i^3) = 0$$

$$(1)$$

where $k$ is the number of process variables or/and variables derived therefrom involved to the general equation (1) linearly with coefficients $a_i$, wherein some or all or none of the said coefficients $a_i$ can be fixed, *each variable (x, y, z) means independently from each other a process variable or a variable derived thereof, which variables (x,y,z) are the inputs of nonlinear functions F,*

variables *l*, m and *n* are the numbers of nonlinear functions *F* involving one, two and three input(s) respectively, wherein each nonlinear function may be involved to more than one model equation (1) and wherein the nonlinear function(s) involved in model equation(s) (1) are defined as weighted sum(s) of products of basis functions, preferably one-dimensional basis functions of inputs of said non-linear functions, as it is defined by equations (2-4) for one, two and three dimensional nonlinear functions ($F^1$, $F^2$, $F^3$) respectively:

$$F^1(x) = \sum_{i=1...p} b_i g_i^x(x) \ ,$$

$$(2)$$

$$F^2(x,y) = \sum_{i=1...p} \sum_{j=1...q} b_{i,j} g_i^x(x) g_j^y(y) \ ,$$

$$(3)$$

$$F^3(x,y,z) = \sum_{i=1...p} \sum_{j=1...q} \sum_{l=1...r} b_{i,j,k} \, g_i^x(x) g_j^y(y) \, g_k^z(z) \ ,$$

$$(4)$$

where $b_i$, $b_{ij}$ and $b_{ijk}$ are the coefficients defining the nonlinear function(s), and $p$, $q$, and $r$ are the number of said basis functions $g_i^x$, $g_j^y$ and $g_k^z$ related to process variables $x$, $y$ and $z$ respectively,

- imposing the conditions on some or all or none of the nonlinear functions $F$ involved in equation(s) (1) to monotonously increase or decrease with respect to some or all inputs (x, y, z) of said nonlinear function(s), and said conditions are converted to the constraints imposed on the coefficients $b_i$, $b_{ij}$ and $b_{ijk}$,

- imposing the conditions on some or all or none of the signs of the coefficients of the linear functions involved to said model equation(s),

- collecting measured values for all process variable(s) and computing the values of all variable(s) derived therefrom, involved to the model equation(s) for achieving a set of data samples, wherein each data sample is a collection of values of all said process variable(s) or/and of variable(s) derived therefrom at a fixed moment,

- identifying the model equation(s) which means determining the coefficients $a_i$ and $b_i$, $b_{ij}$ and $b_{ijk}$ involved to equation(s) (1) according to the definition of the non-linear functions (2-4) by minimizing the errors of the model equation(s) (1) at every data sample, according to equation (5)

$$\min\left[\sum_{i=1}^N \sum_{k=1}^M \alpha_k f(e_{ik}) + \sum_{i=1}^L \beta_i C_i\right]$$

$$(5)$$

wherein $N$ is the number of data samples, $M$ is the number of model equations of general formula (1), $e_{ik}$ is the error of equation $k$ computed by substituting the values of the process variables or/and variables derived therefrom of data sample $i$ to the left side part of equation $k$, $\alpha_k$ is a non-negative coefficient defining the relative weight of equation $k$, $f$ is any loss function describing the penalty incurred by the identification procedure, $\beta_i$ are non-negative parameters defining the desired strength of model flattening, $L$ is the number of different nonlinear functions involved to the model equation(s), and $C_i$ is the total curvature of the nonlinear function number $i$, wherein the minimization (5) is performed under said constraints imposed on the model coefficients $a_i$ and $b_i$, $b_{ij}$ and $b_{ijk}$ representing the monotonousness conditions for the nonlinear functions with respect to their inputs,

- selection of the fault detection thresholds for some or all said identified equation(s),

- computing the errors of said identified model equations by substituting the current values of the process variables or/and variables derived therefrom to the said model equation(s),

- evaluating said errors of the identified model equations against the respective fault detection thresholds, and detecting faults in the flow network or in a part of it and possible

- diagnosing the fault location.

Function $F(x,y)$ is monotonously increasing with respect to $x$, if for any $x_1 > x_2$ and any $y$ the following condition holds:

$$F(x_1, y) \geq F(x_2, y).$$

$$(6)$$

Similarly, the function is monotonously increasing with respect to the second argument $y$ if for any $x$ and $y_1 > y_2$ the inequality holds:

$$F(x, y_1) \geq F(x, y_2).$$

$$(7)$$

This definition can be expanded in the same way to cover one, two and three dimensional functions monotonously decreasing or increasing with respect to any variable which it involves. If piecewise linear basis functions are selected according to equation (9), the two dimensional nonlinear function described by equation (3) is monotonously increasing with respect to both directions, if and only if the following conditions are fulfilled:

$$b_{i,j} \geq b_{i-1,j}, \ i = 1, \dots p, j = 0, \dots, q$$
$$b_{i,j} \geq b_{i,j-1}, \ i = 0, \dots p, j = 1, \dots, q.$$

$$(8)$$

Generally, the monotonous increasing and decreasing conditions for a nonlinear function involving one, two or three variables with respect to some or all these variables can be imposed as constraints on its coefficients, as it is done in equation (8).

In a preferred embodiment of the present invention $g_i^x$, $g_j^y$ and $g_k^z$ are the piecewise linear basis functions defined according to equation (9):

$$g_i^t(t) = \begin{cases} (t - t_{i-1})/(t_i - t_{i-1}) \ if \ t_{i-1} \leq t < t_i \\ (t_{i+1} - t)/(t_{i+1} - t_i) \ if \ t_i \leq t < t_{i+1}, \ \text{for } i = 2 \dots p\text{-}1 \\ 0, otherwise \end{cases}$$

$$g_1^t(t) = \begin{cases} (t_2 - t)/(t_2 - t_1) \ if \ t_1 \leq t < t_2 \\ 0, otherwise \end{cases}$$

$$g_p^t(t) = \begin{cases} (t - t_{p-1})/(t_p - t_{p-1}) \ if \ t_{p-1} \leq t < t_p \\ 0, otherwise \end{cases}$$

$$(9)$$

or the piecewise quadratic basis functions defined by equation (10):

$$g_i^t = \begin{cases} (t - t_{i-1})^2/(t_i - t_{i-1}), & if \; t_{i-1} \leq t < t_i \\ t_{i+1} - t_{i-1} - (t_{i+1} - t)^2/(t_{i+1} - t_i), & if \; t_i \leq t < t_{i+1} \\ t_{i+1} - t_{i-1}, & if \; t_{i+1} \leq t \\ 0, & if \; t < t_{i-1} \end{cases} \quad for \; i = 2, \ldots, p$$

$$g_1^t(t) = \begin{cases} t_2 - t_1 - (t_2 - t)^2/(t_2 - t_1) & if \; t_1 \leq t < t_2 \\ t_2 - t_1, & otherwise \end{cases}$$

$$g_p^t(t) = \begin{cases} (t - t_{p-1})^2/(t_p - t_{p-1}) & if \; t_{p-1} \leq t < t_p \\ 0, & otherwise \end{cases}$$

$$g_{p+1}(t) = 1,$$

$$(10)$$

wherein $t$ denotes one of the process variables $x, y, z$, and $t_i$, $i = 1,\ldots,p$ is the grid related to that process variable x, y or z.

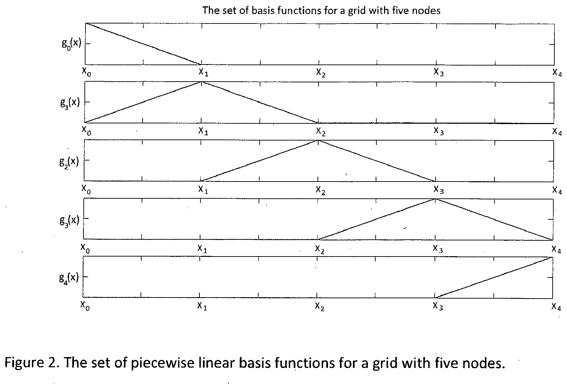

An example of a set of piecewise linear basis functions is demonstrated in Figure 2. It can be seen from Figure 2, that only the basis function $g_i(x)$ has a non-zero value at node $x_i$. Remembering general equation of formula (3-4) one can conclude that coefficient $b_{i,j}$ and $b_{i,j,k}$ define the values of the functions $F^2(x_i,y_j)$ and $F^3(x_i,y_j,z_k)$ at the points $(x_i,y_j)$ and $(x_i,y_j,z_k)$ respectively. The products of the piecewise linear functions involved in general equation (3) are known as bilinear terms and, therefore, the whole function (3) can be characterized as a piecewise bilinear function.

In a preferred embodiment of the present invention the total curvatures $C_i$ in equation (5) are defined as the sum of local curvatures of nonlinear function $i$ computed at the inner points of the one, two or three dimensional grids defined for one, two and three dimensional nonlinear functions according to equations (11-13):

$$x_i, i = 2, \ldots, p - 1$$

$$(11)$$

$$(x_i, y_j), i = 2, \ldots, p - 1, j = 2, \ldots, q - 1$$

$$(12)$$

$$(x_i, y_j, z_k), i = 2, \ldots, p - 1, j = 2, \ldots, q - 1, k = 2, \ldots, r\text{-}1,$$

$$(13)$$

where $p, q,$ and $r$ are the number of nodes in the grids related to variables x, y and z, wherein the said local curvatures are computed as the sums of squared second order divided differences according to equations (14-16):

$$\Delta b_i = \left( \left( \frac{b_{i+1} - b_i}{x_{i+1} - x_i} - \frac{b_i - b_{i-1}}{x_i - x_{i-1}} \right) / \left( \frac{x_{i+1} - x_{i-1}}{2} \right) \right)^2$$

$$(14)$$

$$\Delta b_{i,j} = \left(\left(\frac{b_{i+1,j}-b_{i,j}}{x_{i+1}-x_i} - \frac{b_{i,j}-b_{i-1,j}}{x_i-x_{i-1}}\right) / \left(\frac{x_{i+1}-x_{i-1}}{2}\right)\right)^2 + \left(\left(\frac{b_{i,j+1}-b_{i,j}}{y_{j+1}-y_j} - \frac{b_{i,j}-b_{i,j-1}}{y_j-y_{j-1}}\right) / \right.$$
$$\left.\left(\frac{y_{j+1}-y_{j-1}}{2}\right)\right)^2,$$

$$(15)$$

$$\Delta b_{i,j,k} = \left(\left(\frac{b_{i+1,j,k}-b_{i,j,k}}{x_{i+1}-x_i} - \frac{b_{i,j,k}-b_{i-1,j,k}}{x_i-x_{i-1}}\right) / \left(\frac{x_{i+1}-x_{i-1}}{2}\right)\right)^2 + \left(\left(\frac{b_{i,j+1,k}-b_{i,j,k}}{y_{j+1}-y_j} - \frac{b_{i,j,k}-b_{i,j-1,k}}{y_j-y_{j-1}}\right) / \right.$$
$$\left.\left(\frac{y_{j+1}-y_{j-1}}{2}\right)\right)^2 + \left(\left(\frac{b_{i,j,k+1}-b_{i,j,k}}{z_{j+1}-z_j} - \frac{b_{i,j,k}-b_{i,j,k-1}}{z_j-z_{j-1}}\right) / \left(\frac{z_{j+1}-z_{j-1}}{2}\right)\right)^2.$$

$$(16)$$

In a preferred embodiment of the present invention the squaring loss function is used and a quadratic programming (QP) task must be solved to define the coefficients of equation (1). The following simple example illustrates this statement. Let consider a set of data samples containing the flow through a valve $Q_n$, which is a function of the degree of valve opening $v_n$ and the pressure difference $\Delta P_n$, where $n = 1,... N,$ is a sample number. Denote

$$c_{i,n} = g_i^p(\Delta P_n)$$
$$d_{j,n} = g_j^v(v_n)$$
.

$$(17)$$

Then the sum of the squared errors of the following equation:

$$F(v,P) = Q$$

$$(18)$$

is a quadratic function of the coefficients $b_{ij}$ involved to the nonlinear function $F(v,P)$:

$$\min \sum_{n=1...N}\left(Q_n - \sum_{i,j} b_{ij}\, c_{i,n} d_{j,n}\right)^2 = \min \sum_{i,j} \sum_{k,l} H_{i,j,k,l} b_{ij} b_{kl} - \sum_{i,j} f_{i,j} b_{i,j}$$
$$H_{i,j,k,l} = \sum_n c_{i,n} d_{j,n} c_{k,n} d_{l,n}$$
$$f_{i,j} = -2 \sum_n Q_n c_{i,n} d_{j,n}$$

$$(19)$$

The flow through a valve monotonously increases with respect to the valve opening and the pressure difference, which results in constraints (8). Collecting together the quadratic objective (19) and the linear constraints (8) one concludes that a quadratic programming task must be solved to identify the coefficients $b_{ij}$ defining the valve model. Such task can be solved using standard optimization routines. A more general equation (1) containing several nonlinear functions and some linear terms can be identified in the similar way.

If another loss function is used to evaluate the errors of equation (1), a general constrained nonlinear programming task must be solved to identify the coefficients of the equation. There are many standard optimization methods and routines that can carry out such a task.

With the above defined inventive method the above mentioned objectives 1 and 3 are achieved. With the above described method the flow network models are identified to reflect the structure of flow networks describing the low-dimensional nonlinear functions and the monotonousness of the nonlinear functions with respect to some or all variables. The reliability of the identified model equations under unexplored operational conditions is achieved by flattening the said equations.

The improved accuracy of the identified models would increase the efficiency of many model-based techniques, including but not limited to the fault detection and diagnosis, process optimization, process control and process design.

Advantageously the invention relates to a method comprising additionally a step of diagnosing the fault location and correcting the effects of the faults, when a fault in the flow network or in a part of it is detected. It includes development of a binary residual-fault incidence matrix on the basis of the model equation(s) and the general knowledge of the effects of the faults in the process components. In real time, the current binary pattern is obtained containing the results of the evaluation of the errors of the model equation(s) (1) against the respective fault detection thresholds. The location of the fault is identified based on the comparison of the said current pattern with the fault patterns contained in the said residual-fault incidence matrix. Next, one of the possible corrective actions is selected and applied, including *the process shutdown, the reliable operation* at new operational conditions, *reconfiguration* using other sensors, actuators or redundant process components in order to keep the operational conditions unchanged, and *maintenance by replacing faulty parts of the flow network or components thereof.*

The benefits of the proposed approach to development and implementation of FDD systems come from the fact, that the flow network models are developed to take into account the known properties of the system (structure of the flow network describing the nonlinearity, monotonousness properties). In the result, an improved accuracy of the flow network models is achieved compared other non-linear identification methods. The detection thresholds can be decreased and the rate of the missed alarms can be improved while keeping the false alarm rates constant. Therefore, objective 4 is achieved.

The invention relates also to a method for controlling and /or optimizing of a flow network controlled by valves or a part of it according to claim 8, wherein said flow network is nonlinear in regard to at least one process variable.

This method comprises at least the following steps:

- for identifying the structure of said nonlinear flow network is used at least one model equation which contains at least one function selected from the group comprising linear function(s) of the process variable(s) or/and variable(s) derived therefrom and nonlinear function(s), involving up to three process variables or/and variables derived therefrom, which are inputs of said nonlinear function(s), provided that at least one of said model equation(s) contains at least one said nonlinear function,
  wherein some or all or none of the coefficients of the said linear function(s) can be fixed wherein each nonlinear function may be involved into more than one model equation and wherein each nonlinear function is defined as weighted sum of products of basis functions of its input(s), wherein said weights of products are the coefficients defining the nonlinear function(s) and wherein a set of basis functions is selected for each input of said nonlinear function(s) before the identification of model equation(s),

- imposing the conditions on some or all or none of the nonlinear functions involved in said model equation(s) to monotonously increase or decrease with respect to some or all input(s) of said nonlinear function(s), and said conditions are converted to the constraints imposed on said coefficients defining said nonlinear function(s),

- imposing the conditions on some or all or none of the signs of the coefficients of the linear function(s) involved to said model equation(s)

- collecting measured values for all process variable(s) and computing the values of all variable(s) derived therefrom, involved to the model equation(s) for achieving a set of data samples, wherein each data sample is a collection of values of all said process variable(s) or/and of variable(s) derived therefrom at a fixed moment,

- identifying the model equation(s) which means defining the coefficients of said linear function(s) and the coefficients defining the nonlinear function(s), by minimizing the errors of the model equation(s) at every data sample while taking into account the flattening of said model equations(s), whereby the errors to be minimized in said model equation(s) are defined by substituting the values of the process variable(s) or/and variable(s) derived therefrom to the equation(s), wherein the flattening of model equation(s) is achieved by minimizing the sum of total curvatures of the said nonlinear function(s) taken with nonnegative weights, wherein said minimization of the errors of the model equation(s) together with the said sum of total curvatures is performed under the said constraints imposed both on the coefficients defining said nonlinear function(s) which represent the monotonousness conditions for said nonlinear function(s) with respect to their input(s) and on the signs of the coefficients of the linear function(s) involved to said model equation(s) and

- adjusting the operation of at least a part of the flow network and/or the process control, according to the said identified model equations.

The process control means herein device(s) and/or computer program(s) which monitor some or all process variable(s) and variable(s) derived therefrom and affects the operational conditions of the flow network by adjusting the values of the manipulated variable(s) in order to maintain the values of the controlled variables at the target values. The process control is composed of the controllers, each of which is used to control a part of the flow network.

The input variables mean herein the variables which values affect the operational conditions of a flow network and can be freely changed in certain ranges. Input variable can be, for example a degree of valve opening, pump load, flow rate of raw material.

The invention is mainly based on the following aspects:

- The methods related to the invention describe the flow network controlled by valves with a static model, which is identified using the process data. The method for identifying a model contains the following aspects which are described below in more details: model reflects the structure of nonlinearities in the flow network using low-dimensional nonlinear functions, representation of the nonlinear functions as weighted sums of the products of basis functions, the monotonousness conditions imposed on the nonlinear functions and signs of coefficients of linear terms, flattened nonlinear functions.

- Model reflects the structure of nonlinearities in a flow network using low-dimensional nonlinear functions. A static flow network model can be considered as a system of nonlinear equations, each of which involves a part of process variables. Furthermore, for every equation the structure of the related nonlinear functions is specified as the lists of the process variables involved to these nonlinear functions. In particular, said nonlinear functions can represent the nonlinearity related to the most common devices used in chemical industry, such as valves, pumps, pipes, tanks, chemical reactors and basic combinations of said devices. This aspect allows do not consider the insignificant relations between the process variables during the identification task. This improves the accuracy of the identified models.

- Representation of the nonlinear functions as weighted sums of products of basis functions. In particular, a set of piecewise linear basis functions or a set of piecewise quadratic basis functions can be used. This representation is suitable to rewrite the monotonousness conditions as inequalities imposed on the coefficients defining the nonlinear functions (the weights of the products). As the result, if the said piecewise linear basis functions are used, the identification of the coefficients of an equation involve only linear constraints on the coefficients.

- The monotonousness conditions imposed on nonlinear functions. The dependences between the process variables are typically monotonous. For example, most of the chemical reaction rates are monotonous with respect to the variables they depend on (such as concentrations of chemical compounds, temperature and pressure in the reactor). The flow through a valve monotonously increases with respect to the degree of valve opening and the difference of the pressures before and after the valve. Furthermore, the right side part of the equations can be monotonous with respect to some or all variables involved to the linear functions, which results in constraints on the signs of the coefficients of the said linear functions. In the result, an improved accuracy of the flow network models is achieved.

- Flattened nonlinear functions. The nonlinear model identification methods based on neural networks are known to be unreliable outside the operational conditions described by the data which is used to train the network (the training data). To overcome this problem, the invention identifies the model equations by considering an extra term (a flattening term) together with the values of the loss function of the equation errors as the objective to be minimized. This flattening term takes small positive values at the conditions where the model discovers locally nonlinear behavior and the term takes zero value otherwise. As the result, the relative importance of the flattening term is low under the operational conditions covered by the training data. In opposite, under the operational conditions uncovered by the training data the role of the flattening term becomes dominant and the model is strived to the plane shape. As the result, this technique allows to extrapolate the identified flow network model linearly to the operational conditions unexplored by the training data and achieve relatively high reliability of the resulting model even at these conditions.

The most relevant prior art to present invention has been presented in patent document US 2008/0071394. This patent document propose a constrained non-linear approximator in a field of a neural network whereas the present application suggest a new method for indentifying nonlinear model in a flow network. The equations of this patent document, for achieving said neural network describe for example the computations related to feedforward neural networks and their training. Beside the different field to be used, the present invention differs from disclosure of US 2008/0071394 also by suggesting a method in which inputs of nonlinearities are limited by three whereas neural network are known to relate high-dimensional nonlinearity. In US 2008/0071394 'each transformation element in the next layer then process the inputs received from all of the transformation elements in the previous layer, by summing the inputs, and transforming the sum by the non-linear transfer function In the present invention each nonlinear function is defined as weighted sum of products of basis functions.

Further prior art has presented in document Hui Cheng et al: "Application of the Enhanced Dynamic Causal Digraph Method on a Three-layer Board Machine", Vol 19, NO 3, 1 May 2011, p. 644-655. This document discloses a diagraph reasoning method for fault diagnosis which was tested on a board machine. This document teaches an optimized model having some relevancy to aspects presented in claim 18 but not to the invention defined in independent claims.

**The invention is now illustrated with some non-restrictive examples.**

**EXAMPLE 1**

**Fault detection and diagnosis of the drying section of the board machine located in Imatra**

The aim of this example is to prove the applicability of the fault detection and diagnosis (FDD) method according to the invention to complex flow networks controlled by valves. In this example the method is applied to the steam-water network of the drying section containing many control valves.

The drying section of a board machine is used to evaporate water from the board by heating. Since only insignificant amount of moisture is removed from the board after the drying section, the drying is typically controlled to achieve the specified moisture of the ready product (board). In a multi-cylinder drying, which is the most common drying method, the process contains a number of consequent steam drying cylinders combined into several drying groups, and the process under consideration contains 5 groups. In order to control the web curl, the last drying group is composed of two steam groups (groups 8 and 7) comprising of the cylinders placed above and below the web respectively. In fact, a complex steam-water network with a number of recirculation streams is needed to support the desired conditions in the cylinders and provide the acceptable energy efficiency of the drying process.

The FDD system must be aimed at the most frequent faults in the section which can cause the most valuable losses of productivity and deviations in quality of the ready board. According to the opinion of the industrial experts, the key faults to focus on are the leakages and blockages of valves and pipes in the steam-water network of the drying section. Small magnitude faults may cause energy losses, but a large fault could even cause inability of the control system to maintain the required quality of the ready product and may cause a plant shutdown.

*System description*

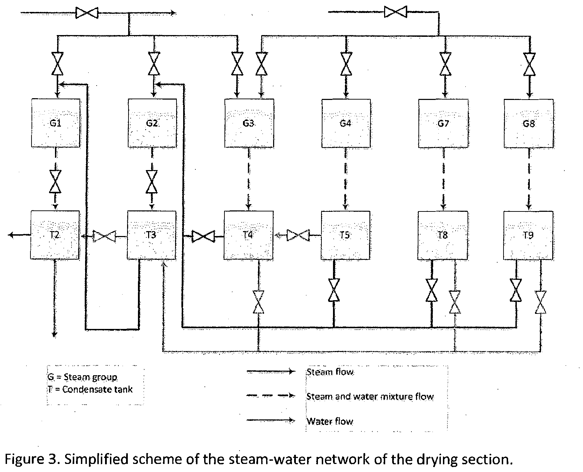

The steam-water network of the drying section is presented in Figure 3. Steam is supplied to the steam groups by two steam feed flows (5 bar steam is used by groups 1, 2 and 3; 10 bar steam is used by groups 3, 4, 7 and 8). A part of the 5 bar feed steam flow is also sent to the calendar and to the heat exchangers which are used to control the temperature in the plant building. The flow rate, pressure and temperature are measured at both feed steam flows. In addition, the pressure is measured immediately before and after each steam group. Since there are no valves between steam groups 3, 4, 7 and 8 and the respective condensate tanks 4, 5, 8 and 9, one can conclude that the pressures in the condensate tanks are the same as the pressures immediately after the respective steam groups. In contrast to this, there are valves between steam groups 1 and 2 and condensate tanks 2 and 3. The pressure in condensate tank 2 is measured. The pressure in tank 3 is not measured, and it is assumed that the pressure in this tank 3 is the same as the pressure before the steam group 1. The valves presented in Figure 3 are used by the process control to keep the pressures before the cylinder groups, the pressure drop in each cylinder group and the condensate tank levels at the target values. The control signals sent to all valves (the degrees of valve opening) are available. Finally, the levels of the condensate tanks are also measured.

*Application of the proposed method to the drying section*

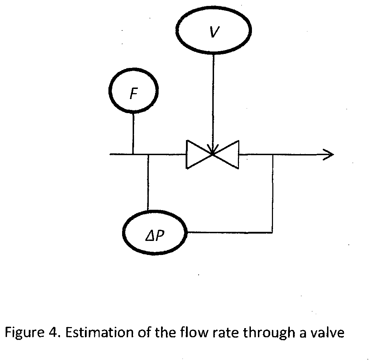

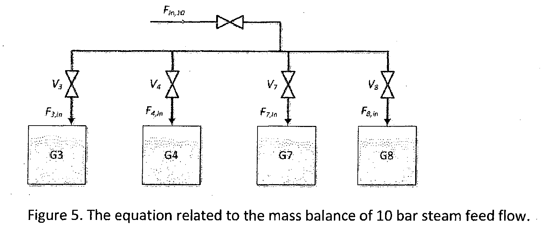

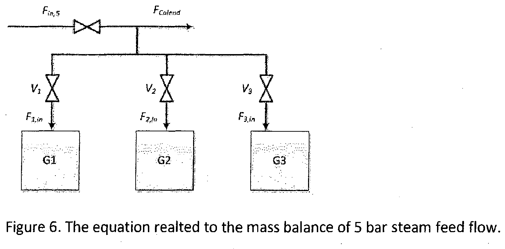

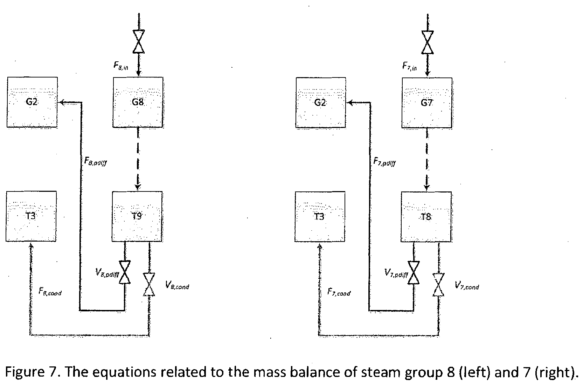

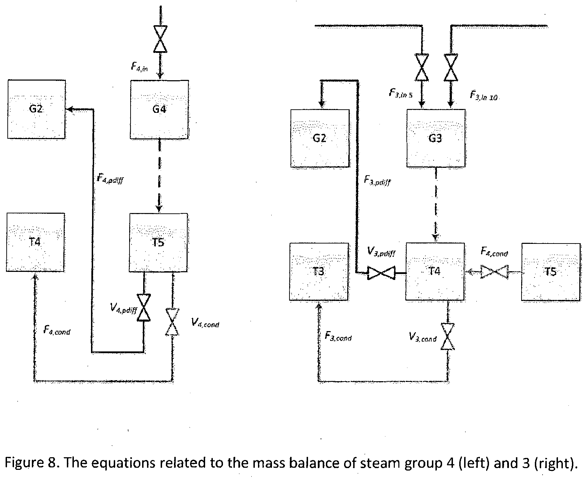

To detect and diagnose the leakages and blockages in valves and pipes, a model is needed consisting of equations which represent the mass balances of different parts of the network. A mass balance in a network is normally based on values of flow rates, however, only two flow rate measurements of the feed steam flows are available in the network. Even though the pressure measurements and the degrees of valve opening cannot be used directly in the mass balances, these variables allow to estimate the flow rates through the valves according to equation (20) and Figure 4:

$$F = f(V, \Delta P). \tag{20}$$

Here F is reserved for the flow rate, f is a nonlinear function to be determined, V is the degree of valve opening, and $\Delta$P is the difference of the pressure before and after the valve. To conclude, the nonlinear functions involved to the model equations correspond now to the valves, and the value of a nonlinear function involved to the model equations represent the flow through the related valve. Inputs of a nonlinear function are the degree of opening of the respective valve and the difference of the pressure before and after the respective valve. In other words, non-linear functions can be considered as models of the respective valves. The structure of the model equations is presented next in a more detailed way.

*The list of the model equations*

The simplified scheme of the steam-water network results in the following model equations:

- The equation related to the mass balance of the 10 bar steam feed flow:

$$f_{3,in\,10}(V_3, \Delta P_3) + f_{4,in}(V_4, \Delta P_4) + f_{7,in}(V_7, \Delta P_7) + f_{8,in}(V_8, \Delta P_8) - F_{in,10} = 0 \tag{21}$$

- The equation related to the mass balance of the 5 bar steam feed flow:

$$f_{1,in}(V_1, \Delta P_1) + f_{2,in}(V_2, \Delta P_2) + f_{3,in\,5}(V_3, \Delta P_3) + F_{Calend} - F_{in,5} = 0 \tag{22}$$

- The equation related to the mass balance of steam group 8:

$$f_{8,cond}(V_{8,cond}, \Delta P_{8,cond}) + f_{8,pdiff}(V_{8,pdiff}, \Delta P_{8,pdiff}) - F_{8,in} = 0 \tag{23}$$

- The equation related to the mass balance of steam group 7:

$$f_{7,cond}(V_{7,cond}, \Delta P_{7,cond}) + f_{7,pdiff}(V_{7,pdiff}, \Delta P_{7,pdiff}) - F_{7,in} = 0 \tag{24}$$

- The equation related to the mass balance of steam group 4:

$$f_{4,cond}(V_{4,cond}, \Delta P_{4,cond}) + f_{4,pdiff}(V_{4,pdiff}, \Delta P_{4,pdiff}) - F_{4,in} = 0 \tag{25}$$

- The equation related to the mass balance of steam group 3:

$$f_{3,cond}(V_{3,cond}, \Delta P_{3,cond}) + f_{3,pdiff}(V_{3,pdiff}, \Delta P_{3,pdiff}) - F_{3,in\,5} - F_{3,in\,10} - F_{4,cond}$$
$$= 0$$

$$(26)$$

**Identification of the model equations**

The pressure differences related to all valves have been computed by means of pressure measurements. Grids with 5 nodes have been selected for the degrees of valve opening and the pressure differences, which are inputs of the nonlinear functions involved to the model equations. Next, the sets of 5 piecewise linear functions have been constructed for the said inputs of the nonlinear functions.
In fact, many nonlinear functions are involved to more than one equation, and the model equations have been identified sequentially (one by one). In brief, the equations involving the available flow rate measurements are identified by solving the related quadratic programming problems. The data is substituted to the non-linear functions, involved to the equations that have already been identified, to compute the flow rates through the related valves at every data sample. Next, these flow rates are substituted to the unidentified model equations, and these equations are then identified by solving the related QP problems. This procedure is repeated until all model equations have been identified.

In this example, the equation related to the mass balance of the 10 bar steam feed flow is identified first, and the coefficients defining the nonlinear functions $f_{3,in\,10}$, $f_{4,in}$, $f_{7,in}$, $f_{8,in}$, which relate to the valves placed before steam groups 3, 4, 7 and 8, are obtained. Similarly, the equation related to the mass balance of the 5 bar steam feed flow is identified, and the coefficients defining nonlinear functions $f_{1,in}$, $f_{2,in}$, $f_{3,in\,5}$, which relate to the valves placed before steam groups 1, 2 and 3, are obtained.

At the next stage, the process data is substituted to the nonlinear functions identified at the previous step to estimate the steam flow rates to the steam groups $F_{3,in\,5}$, $F_{3,in\,10}$, $F_{4,in}$, $F_{7,in}$, and $F_{8,in}$. These flow rates are then substituted to the rest of the model equations. The model equations related to mass balance of steam groups 4, 7 and 8 are identified, and the coefficients defining the nonlinear functions related to pressure difference control valves $f_{4,pdiff}$, $f_{7,\,pdiff}$, $f_{8,\,pdiff}$ and the condensate tank level control valves $f_{4,cond}$, $f_{7,\,cond}$, $f_{8,\,cond}$ are obtained. Finally, the nonlinear function $f_{4,cond}$ related to the control valve for the level of condensate tank 5 is used to compute the condensate inflow rate $F_{4,cond}$ to condensate tank 4, and the equation related to the mass balance of steam group 3 is then identified.

*Selection of the model structure for the control valve of the level of condensate tank 5*

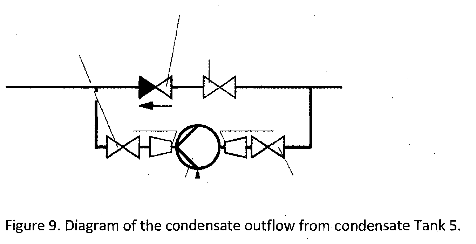

The accuracy of the identified equations has been evaluated, and the equations related to the mass balances of the feed steam flows and stem groups 8 and 7 have been found sufficiently accurate. In contrast to this, the error of the equation representing the mass balance of steam group 4 was too big for reliable fault detection. In fact, the condensate outflow from tank 5 passes through the combination of a pump and a one-side valve connected in parallel (see Figure 9) placed before the control valve. In order to describe the condensate flow rate more precisely, a nonlinear function of three variables (the degree of valve opening, the pressure in condensate tank 5, the pressure in condensate tank 4) was tried:

$$f_{4,cond}\left(v_{4,cond}, P_{4,cond}^{before}, P_{4,cond}^{after}\right) + f_{4,pdiff}\left(v_{4,pdiff}, \Delta P_{4,pdiff}\right) - F_{4,in} = 0$$

$$(27)$$

Compared equation (25), the pressure difference $\Delta P_{4,cond}$ has been replaced by the pressures before and the pressure after the condensate valve. The nonlinear function representing the condensate valve in (27) must be monotonously increasing with respect to first two inputs and monotonously decreasing with respect to the last input. If squaring loss function is used, equation (27) can be still identified by solving a quadratic programming task.

The equations representing the mass balance of steam group 4 were identified both with two-input (25) and three-input (27) models of the condensate valve. For identification 4000 data samples were used while 600 samples are reserved for testing of the equation. Table 2 summarizes the percentage of variation of the inflow rate $F_{4,in}$ to group 4 captured by the valve models according to equations (25) and (27). The table proves, that the equation (27), employing the three-input non-linear function to describe the condensate outflow from tank 5, is more precise.

**Table 2. Comparison of two model structures for the control valve of the level of condensate tank 5**

| | $R^2$ captured, data used for identification | $R^2$ captured, data used for testing |
|---|---|---|
| The valve model with two inputs | 88.1 % | 89.2 % |
| The valve model with three inputs | 95.0 % | 95.0 % |

*Testing the effect of the monotonousness conditions*

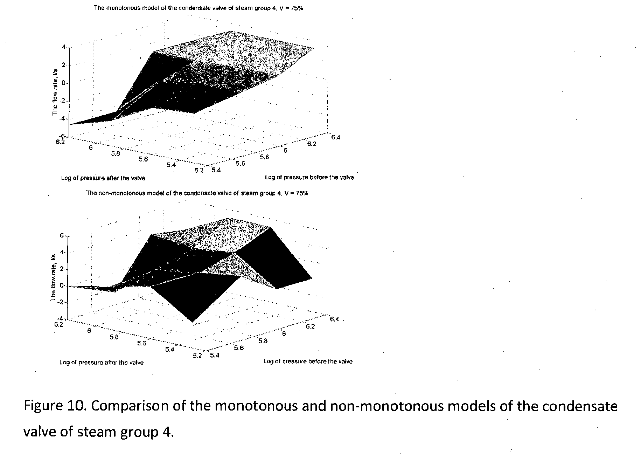

To test the effect of monotonous conditions, equation (27) related to the mass balance in steam group 4 was identified twice: under the monotonousness conditions and without imposing these conditions. Table 3 presents the variation of the inflow rate $F_{4,in}$ to the group captured by the nonlinear functions in equation (27). Again, 4000 samples are used to identify the equation while 600 samples are reserved for testing. The results of the testing of model equations with or without monotonousness requirement show, that the equations employing non-monotonous nonlinear functions demonstrate worse accuracy due to adoption to the process noise. Both valve models of the condensate valve are compared in Figure 10.

**Table 3. Comparison of the results for equation related to the mass balance of steam group 4 using monotonous and non-monotonous valve models**

| | $R^2$ captured, data used for identification | $R^2$ captured, data used for testing |
|---|---|---|
| Monotonous model | 95.0 % | 95.6 % |
| Non-monotonous model | 96.3 % | 90.3 % |

The effect of the monotonousness conditions is even stronger when the whole set of model equations is considered: the equations using non-monotonous valve models demonstrate about 10% worse $R^2$ values for test data compared the equations employing the monotonousness conditions.

*Testing the effect of the flattening of the nonlinear functions*

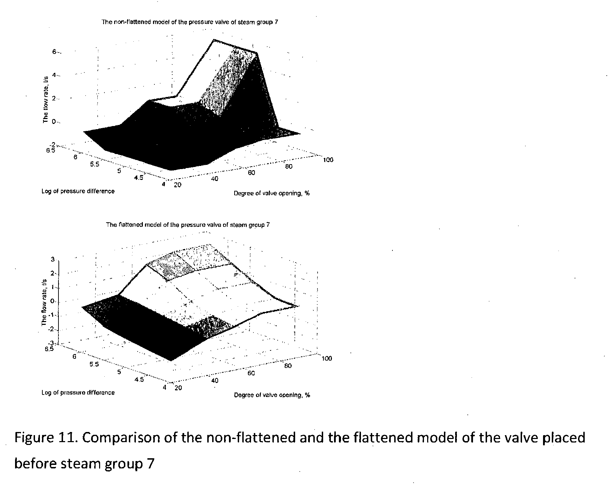

The process data is often distributed very non-uniformly, and the data used for identification of the equations describing said process cannot cover all possible operational conditions. Therefore, during on-line detecting of faults operational conditions of the valves can move to unexplored zone. To demonstrate the ability of flattened models to remain trustworthy at the unexplored operational conditions, the equation related to the mass balance of 10 bar steam feed flow was identified twice: first, flattening of the nonlinear functions was used and next the equation was identified without flattening. The equation was identified using 4600 samples and 1000 samples are reserved for testing of the identified equations. Both the flattened and the non-flattened models of the valve placed before steam group 7 are presented in Figure 11. The range between the smallest and the largest flow rates according to the non-flattened valve model is 7.1 I/s while the range for the flattened valve model is only 4.4 I/s. As the result, under unexplored operational conditions the flow rate estimation according to the non-flattened model may contain unrealistic values (outliers), and the degradation of reliability of the non-flattened model is demonstrated by Table 4.

The flattened valve models are able to explain less percentage of the variation of the flow rate $F_{in,\,10}$ of 10 bar steam feed flow at the testing data compared the data used to identify the equation. However, the accuracy of the flattered model at the testing data can be considered as acceptable since some increase of the equation error is quite expectable due to the nonlinear character of the process.

**Table 4. Comparison of the results of the original and the flattened monotonous models**

| | R2 captures, data used to identify the model | R2 captures, data used to test the model |
|---|---|---|
| Original monotonous model | 99.5% | 61.5 % |
| Flattened monotonous model | 99.5% | 84.0 % |

*Testing the accuracy of the identified model equations*

The model equations are identified using the data collected between 1 of March 2010 and 11 of July 2010 and the process data obtained between 12 of July and 24 of July is used for model testing. The equation related to the mass balances of the 5 bar steam feed flow and steam group 3 are not tested due to the lack of reliable data. The results of the evaluation of the identified model equations are presented in Table 5. For all equations, the sum of terms involved to the equations with negative sign and the sum of terms involved with the positive sign are computed separately, and the percentage of variation of the first sum explained by the second sum is provided in the Table. In addition, the errors of the model equations are obtained by substituting the process data to said equations. The standard deviations of the errors of the model equations are provided in the Table.

**Table 5. Summary of the developed parity equations**

| Parity equation | Data used to identify the equations | | Data used to test the equations | |
|---|---|---|---|---|
| | R2 captured | Standard deviation | R2 captured | Standard deviation |
| 10 bar steam feed flow | 99.5 % | 0.116 l/s | 95.9 % | 0.152 l/s |
| 5 bar feed steam flow | 91.9 % | 0.167 l/s | - | - |
| Steam group 8 | 94.1 % | 0.056 l/s | 91.4 % | 0.077 l/s |
| Steam group 7 | 91.2 % | 0.046 l/s | 93.6 % | 0.046 l/s |
| Steam group 4 | 95.0 % | 0.090 l/s | 95.6 % | 0.092 l/s |
| Steam group 3 | 96.9 % | 0.133 l/s | - | - |

*Fault detection and fault diagnosis*

The fault detection and diagnosis tasks are carried out as defined in claims. The fault detection thresholds are selected according to the accuracy of the model equations. The current values of the process variables and the variables obtained therefrom (the pressure differences) are substituted to the model equations and the errors of the equations are computed. The errors of the equations are evaluated against the fault detection thresholds and the results are collected to the binary pattern. If the pattern contains at least one nonzero value, the decision is made that the process contains at least one fault, otherwise the process is decided as faultless.

The diagnosis task is carried out on the basis of the residual-fault incidence matrix: the fault candidates are found by comparing the current pattern against the patterns contained in the residual-fault incidence matrix.

*A case study of a fault*

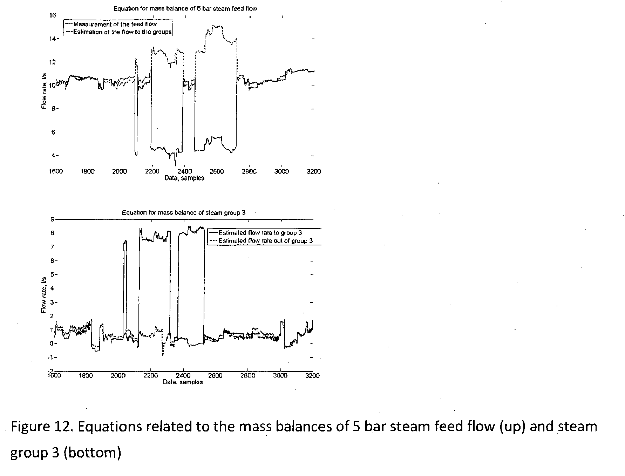

The fault considered in this example is blockage of the valve placed on the 5 bar steam feed flow to steam group 3. The equation related to the mass balances of 5 bar feed steam flow is presented in Figure 12. The solid line is used for the measured flow rate of the 5 bar steam feed without the flow rate of the feed steam to the calendar. The dashed line represents the sum of estimated flow rates of the 5 bar feed steam to steam groups 1, 2 and 3. In the faultless conditions, these two values almost coincide, and in the presence of the fault these values clearly differ. The equation related to the mass balance for steam group 3 is presented in Figure 12. The solid line represent the sum of estimations of the flow rates of 5 bar steam and 10 bar steam feed flows to steam group 3 and the flow rate of the condensate from condensate tank 5 to condensate tank 4. The dashed line is used for sum of estimations of the steam flow rate out of steam group 3 and the condensate flow rate out of condensate tank 4. The difference between these two sums indicates the presence of a fault.

Due to the valve blockage, the equations related to the mass balances of the 5 bar steam feed flow and the steam group 3 have large errors, while the rest of the equations remain undisturbed. This pattern allows to diagnose the fault location unambiguously. As the result of the fault, the pressure in steam group 3 drops, and the 10 bar stem feed flow is increased to keep the pressure in the steam group at the target value.

**EXAMPLE 2**

**Identification of model of chemical reactors**

The reaction rates are usually monotonous with respect to many factors, such as concentrations of chemical compounds, temperature, pressure etc. In fact, a model equation is frequently needed which predicts the concentrations of the compounds at the output of a reactor rather than the reaction rates. In contrast to continuous reactors, many measurements are only available at the beginning and at the end of batch processes and, therefore, batch reactors and continuous reactors must be considered separately.

For a continuous reactor, the properties of a reactor outflow (such as the concentrations of the compounds and the temperature) can be usually modeled as non-linear functions of the properties of reactor inflow (concentrations of compounds at the inlet flow, the temperature of the inlet flow, the flow rate to the reactor) and the residence time in the reactor. As a result, a model of a continuous reactor is composed of model equations involving one linear term (one of the properties of the reactor outflow) and one nonlinear function of the properties of the reactor inflow and the residence time. Typically, the properties of the reactor outflow are monotonous with respect to most or all properties of the reactor inflow, and therefore the monotonousness conditions can be imposed on the nonlinear functions. To reduce the number of variables involved in the nonlinear functions, the variables derived from these process variables (=transformed variables) can be used.

For a batch reactor, the concentrations of the compounds in the final product can be predicted by integrating the system of ODEs, which describes the dynamics of concentrations of chemical compounds $C_1(t), C_2(t),..., C_k(t)$ through the reaction rates:

$$\dot{C}_1(t) = \sum_{i=1}^{m} a_{1,i} R_i\big(C_1(t),.., C_n(t), P(t), T(t)\big)$$
$$...$$
$$\dot{C}_n(t) = \sum_{i=1}^{m} a_{n,i} R_i\big(C_1(t),.., C_n(t), P(t), T(t)\big)$$

$$(28)$$

where $R_1, R_2,..., R_m$ are the nonlinear functions defined according to equations (2-4), $P(t)$ and $T(t)$ are the pressure and the temperature in the reactor, and $a_{i,j}$ are stoichiometric coefficients. Then the coefficients defining the nonlinear functions, which represent the reaction rates $R_i$, are identified by minimizing the squared equation errors:

$$\sum_{i=1}^{B} \sum_{j=1}^{n} \big(C_j^i(t_i) - Cm_j^i\big)^2 \rightarrow min,$$

$$(29)$$

where $B$ is the number of batches, $t_i$ is the duration of batch $i$, $C_j^i$ is the solution of equation (28) corresponding to batch $i$, and $Cm_j^i$ are the measured concentrations of the compounds in the final product of batch $i$.

The chemical laws can be applied to decrease the numbers of inputs of the non-linear functions involved in dynamics (28). The reaction rates often depend on the concentrations of few chemical compounds whereas pressure necessarily does not have a significant effect on the speed of chemical reactions. Furthermore, if the effect of some inputs on the reaction rate is known, a decrease in the number of inputs of a nonlinear function can be achieved, by employing transformed variables as inputs of the nonlinear function. For example, consider a reaction rate which is known to be proportional to the product of concentrations $C_A$ and $C_B$ of two compounds A and B, and it is known to increase with respect to the temperature. The reaction rate can then be considered as a function of two variables:

$$R(x, T),$$

$$(30)$$

here $T$ is the reaction temperature and $x$ is the transformed variable:

$$x = C_A C_B.$$

$$(31)$$

Alternatively, a one-dimensional nonlinear function can be defined as follows:

$$R(T) = \frac{R(C_A, C_B, T)}{C_A C_B},$$

(32)

and the system dynamics (28) must then be rewritten to include the following term to the right-side part:

$$R\big(T(t)\big)C_A(t)C_B(t).$$

(33)

**EXAMPLE 3**

**Optimization of operational conditions of processes**

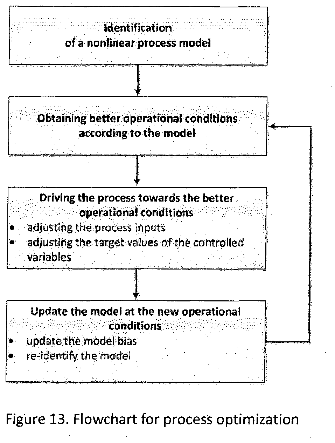

To carry out optimization of operational conditions, a set of non-linear model equations can be identified as it is proposed in the invention. The standard optimization routines (for solving convex programming problems) can then be applied to define better operational conditions according to the model equations and with respect to the existing process constraints. The operational conditions are searched according to an optimization criteria, such as increasing the process productivity, the quality of the ready product, decreasing the production costs or improving the overall process profitability. At the next stage, the process is driven to the better operational conditions by adjusting both the process inputs unused by the process control and the target values of the controlled variables, which are provided to the process control. However, the processes always contain disturbances and the models identified from data are never completely reliable under unexplored conditions. Due to these facts, usually the model equations must be updated in the adaptive way. The 'bias update' procedure is frequently used, which estimates the systematic error of the model and shifts the model equations to compensate this error. Alternatively, the model equations can be re-identified taking into account the recent process data. As the result, the iterative approach allows to explore new operational conditions in order to find the optimum of the process, and take the current values of the process disturbances into account. Identification of process models according to the invention allows to improve the accuracy of the models compared the standard techniques, which results in faster (less iterations are needed to achieve the optimum operational conditions) and more accurate (the necessary optimality conditions are tracked more accurately) optimization of the process operational conditions. The proposed method is presented in Figure 13.

**EXAMPLE 4**

**Design of adaptive control**

The process control is used to keep the controlled variables (typically the process outputs) close to the target values. The parameters of the controllers are selected depending on the dynamic characteristics of the process which can be expressed in terms of dynamic responses of the manipulated variables on the controlled variables. While in linear processes these responses are constant with respect to operational conditions, it is not true for nonlinear processes, and the performance of controllers with fixed parameters may degrade due to change of the operational conditions as the result. The industrial processes are typically nonlinear, and that is why the parameters of the controllers frequently must be adjusted according to the current operational conditions.

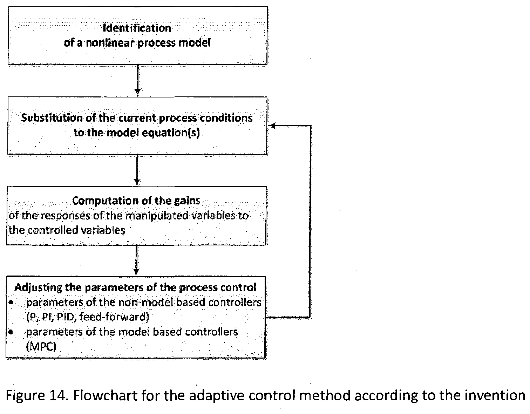

This adaption of the parameters of the controllers can be carried out according to Figure 14. The model equations are identified according to the invention. The current values of the process variables and derived therefrom are substituted to the equations and the gains of the controlled variables with respect to the manipulated variables can be derived in the straightforward way. Next, the parameters of the non-model based controllers are re-adjusted to reflect the current gains. For example, a smaller control action is needed if the gain increases. In addition, the models used by the model-based controllers are scaled according to the said gains. The adaption of the parameters of the controllers allows taking into account changing operational conditions and prevents degradation of the process control performance.

**EXAMPLE 5**

**Optimization of a plant structure**

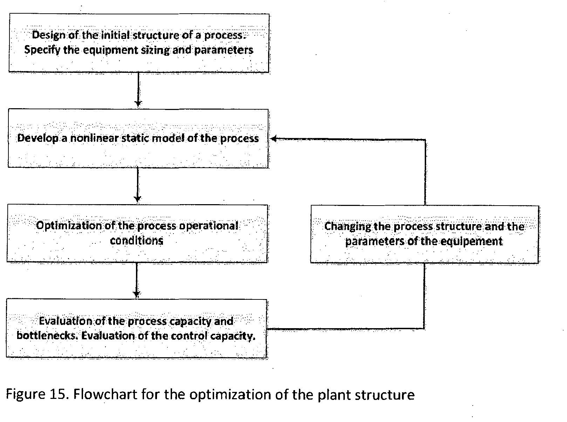

During the design phase the structure of an industrial process is selected and the equipment assets are sized to achieve the desired production rate together with the specified product quality. In addition, the process efficiency must be maximized and the control capacity must be sufficient to compensate all possible disturbances at the planned operational conditions. Therefore a static process model is required to optimize the operational conditions and to evaluate the capacity of the control system. The modeling technique presented in the invention can be used to describe the separate plant equipments (such as valves, pumps and pipes), groups of plant equipments (for example a valve and a pump combined in series) and the process units (reactors, heat-exchangers, etc.). Therefore the presented modeling approach is suitable for implementing the optimization of the operational conditions and evaluation of the control capacity during the optimization of the plant structure. The plant structure can be optimized in the iterative way, presented in Figure 15.

**Claims**

1. A method for detecting faults in a flow (F) network controlled by valves (V) or in a part of it, wherein said flow (F) network is nonlinear in regard to at least one process variable, which method comprises at least the following steps

    - for identifying the structure of said flow (F) network is used at least one model equation which contains at least one function selected from the group comprising linear function(s) of the process variable(s) or/and variable(s) derived therefrom and nonlinear function(s), wherein some or all or none of the coefficients of the said linear function(s) can be fixed wherein each nonlinear function may be involved into more than one model equation
    - imposing the conditions on some or all or none of the nonlinear functions involved in said model equation(s) to monotonously increase or decrease with respect to some or all input(s) of said nonlinear function(s), and said conditions are converted to the constraints imposed on said coefficients defining said nonlinear function(s),
    - imposing the conditions on some or all or none of the signs of the coefficients of the linear function(s) involved to said model equation(s)
    - collecting measured values for all process variable(s) and computing the values of all variable(s) derived therefrom, involved to the model equation(s) for achieving a set of data samples, wherein each data sample is a collection of values of all said process variable(s) or/and of variable(s) derived therefrom at a fixed moment, **characterized in that**

        up to three process variables or/and variables derived therefrom are involved, which are inputs of said nonlinear function(s), provided that at least one of said model equation(s) contains at least one said nonlinear function,
        each nonlinear function is defined as weighted sum of products of basis functions of its input(s), wherein said weights of products are the coefficients defining the nonlinear function(s) and wherein a set of basis functions is selected for each input of said nonlinear function(s) before the identification of model equation(s), and
        wherein the method further comprises the steps of:

            - identifying the model equation(s) which means defining the coefficients of said linear function(s) and the coefficients defining the nonlinear function(s), by minimizing the errors of the model equation(s) at every data sample while taking into account the flattening of said model equations(s), whereby the errors to be minimized in said model equation(s) are defined by substituting the values of the process variable(s) or/and variable(s) derived therefrom to the equation(s), wherein the flattening of model equation(s) is achieved by minimizing the sum of total curvatures of the said nonlinear function(s) taken with nonnegative weights, wherein said minimization of the errors of the model equation(s) together with the said sum of total curvatures is performed under the said constraints imposed both on the coefficients defining said nonlinear function(s) which represent the monotonousness conditions for said nonlinear function(s) with respect to their input(s) and on the signs of the coefficients of the linear function(s) involved to said model equation(s),
            - selecting the fault detection thresholds for at least one identified model equation,
            - computing the errors of said identified model equation(s) by substituting the current values of the process variables or variables derived therefrom to the said equation(s),

- evaluating said errors of the identified model equation(s) against the respective fault detection thresholds, and detecting faults in the flow network or in a part of it.

2.  A method according to claim 1 for detecting faults, diagnosing the fault location and/or correcting the effects of the faults in a flow (F) network with chemical reaction(s) or a part of it, wherein said flow (F) network with chemical reaction(s) is nonlinear in regard to at least one process variable, wherein the model equations relate to the mass balances, the energy balances and the rates of chemical reactions, wherein some or all or none of the coefficients of the said linear functions can be fixed according to the mass balances, the energy balances or other physical or chemical phenomenas in said flow (F) network with chemical reaction(s), wherein

- the model equation(s) related to the mass balances are composed of linear functions which in particular represent the flow (F) measurements, variables reflecting the rate of change of the mass of substance in tanks (T) involved to said flow (F) network with chemical reaction(s), and the nonlinear functions which in particular represent flows (F) through process devises, such as valves (V) and pumps, and/or combinations thereof,

- the model equation(s) related to the energy balances are composed of linear functions which in particular represent the energy flow(s), variables reflecting the rate of change of the energy accumulated in the tanks (T) involved to said flow network with chemical reaction(s), and the nonlinear functions which in particular represent the energy released/consumed by the chemical reactions and heat exchange phenomena in said flow (F) network with chemical reaction(s),

- the model equation(s) related to speed of chemical reactions are composed of linear functions which represent the concentrations and/or flows (F) of chemical compounds and the nonlinear functions, representing various chemical reactors, wherein the inputs of a nonlinear function are selected among the properties of the inlet flows to the reactor, pressure (p) and temperature in the said reactor, and the residence time of the substance in the reactor or/and variables derived therefrom.

3.  A method according to claims 1 or 2 for detecting faults in a flow (F) network controlled by valves (V), which may also include other devices such as pipes, pumps, tanks (T) and chemical reactors, wherein the method comprises at least the following steps:

- for identifying the structure of said flow (F) network is used at least one model equation representing the mass balance(s) of different part(s) of said flow (F) network which contains at least one function selected from the group comprising linear function(s) of the process variable(s) or/and variable(s) derived therefrom and nonlinear function(s), involving up to three process variables or/and variables derived therefrom, which are inputs of said nonlinear function(s), provided that at least one of said model equation(s) contains at least one said nonlinear function,
wherein the linear functions involved to the said model equations represent the flow (F) measurements and/or derivatives of the tank (T) levels and/or variables reflecting the amount of the chemical substance in tanks (T) and pipes involved to the said flow (F) network, wherein some or all or none of the coefficients of the said linear function(s) can be fixed to properly represent the mass balances

- imposing the conditions on some or all or none of the signs of the coefficients of the linear function(s) involved to said model equation(s) to properly represent the mass balances,
wherein at least one of the said nonlinear functions involved to said model equation(s) correspond the operation of valves (V) in said flow (F) network, wherein said inputs of nonlinear function are the degree of opening of the respective valve and the pressure measured before and after the respective valve or variables derived therefrom,
wherein the value of a nonlinear function involved to the model equations represent the flow through the related valve (V), wherein each nonlinear function may be involved into more than one model equation and wherein each nonlinear function is defined as weighted sum of products of basis functions of its input(s), wherein said weights of products are the coefficients defining the nonlinear function(s) and wherein a set of basis functions is selected for each input of said nonlinear function(s) before the identification of model equation(s),

- imposing the conditions on some or all or none of the nonlinear functions involved in said model equation(s) to monotonously increase or decrease with respect to some or all input(s) of said nonlinear function(s), and said conditions are converted to the constraints imposed on said coefficients defining said nonlinear function(s), wherein said conditions are imposed on the nonlinear functions according to properties of valves or/and other equipments, in particular the flow (F) through a valve (V) increases with respect to the degree of valve opening and the pressure before the valve, and the flow decreases with respect to the pressure (P) after the valve,

- collecting measured values for all process variable(s) and computing the values of all variable(s) derived therefrom, involved to the model equation(s) for achieving a set of data samples, wherein each data sample is a collection of values of all said process variable(s) or/and of variable(s) derived therefrom at a fixed moment,

- identifying the model equation(s) which means defining the coefficients of said linear function(s) and the coefficients defining the nonlinear function(s), by minimizing the errors of the model equation(s) at every data sample while taking into account the flattening of said model equations(s), whereby the errors to be minimized in said model equation(s) are defined by substituting the values of the process variable(s) or/and variable(s) derived therefrom to the equation(s), wherein the flattening of model equation(s) is achieved by minimizing the sum of total curvatures of the said nonlinear function(s) taken with nonnegative weights, wherein said minimization of the errors of the model equation(s) together with the said sum of total curvatures is performed under the said constraints imposed both on the coefficients defining said nonlinear function(s) which represent the monotonousness conditions for said nonlinear function(s) with respect to their input(s) and on the signs of the coefficients of the linear function(s) involved to said model equation(s),

- selecting the fault detection thresholds for at least one identified model equation,

- computing the errors of said identified model equation(s) by substituting the current values of the process variables or variables derived therefrom to the said equation(s),

- evaluating said errors of the identified model equation(s) against the respective fault detection thresholds, and detecting faults in the flow (F) network or in a part of it, wherein the signs of the errors of the model equations can be used to distinguish leakages and blockages of valves (V) and pipes.

4. The method according to claim 1, 2 or 3, wherein for identifying the structure of said flow (F) network controlled by valves (V) is additionally used other equations than model equations defined in claim 1, 2 or 3.

5. The method according to claim 1, 2, 3 or 4 comprising additionally the step of diagnosing the fault location, when a fault in the flow (F) network controlled by valves (V) or in a part of it is detected, by

   - development of a binary residual-fault incidence matrix on the basis of the model equation(s) and the knowledge of the effects of the faults in flow (F) network parts or devices,
   - obtaining the current binary pattern, containing the results of the evaluation of the errors of the model equation(s) against the respective fault detection thresholds,
   - identifying the location of the fault based on the comparison of the said current pattern with the fault patterns contained in said residual-fault incidence matrix.

6. The method according to claim 5 further comprising a step of correcting the effects of faults in a flow (F) network controlled by valves (V) or in a part of it, when the location of the current fault is diagnosed in the flow (F) network.

7. The method according to claim 6 comprising selecting and applying a corrective action into the flow (F) network controlled by valves (V), including the process shutdown, the reliable operation of the flow (F) network or part of it at new operational conditions, reconfiguration of the flow (F) network or part of it using sensors, actuators or redundant components in order to keep the operational conditions unchanged, and maintenance of the flow (F) network by replacing faulty parts of the flow (F) network or devices thereof.

8. A method for controlling and /or optimizing of a flow (F) network controlled by valves (V) or a part of it, wherein the said flow (F) network is nonlinear in regard to at least one process variable, wherein the method comprises at least the following steps

   - for identifying the structure of said flow (F) network is used at least one model equation which contains at least one function selected from the group comprising linear function(s) of the process variable(s) or/and variable(s) derived therefrom and nonlinear function(s), wherein some or all or none of the coefficients of the said linear function(s) can be fixed wherein each nonlinear function may be involved into more than one model equation
   - imposing the conditions on some or all or none of the nonlinear functions involved in said model equation(s) to monotonously increase or decrease with respect to some or all input(s) of said nonlinear function(s), and said conditions are converted to the constraints imposed on said coefficients defining said nonlinear function(s),
   - imposing the conditions on some or all or none of the signs of the coefficients of the linear function(s) involved to said model equation(s)
   - collecting measured values for all process variable(s) and computing the values of all variable(s) derived therefrom, involved to the model equation(s) for achieving a set of data samples, wherein each data sample is a collection of values of all said process variable(s) or/and of variable(s) derived therefrom at a fixed moment, **characterized in that**:

      up to three process variables or/and variables derived therefrom are involved, which are inputs of said nonlinear function(s), provided that at least one of said model equation(s) contains at least one said nonlinear function,

each nonlinear function is defined as weighted sum of products of basis functions of its input(s), wherein said weights of products are the coefficients defining the nonlinear function(s) and wherein a set of basis functions is selected for each input of said nonlinear function(s) before the identification of model equation(s), and

wherein the method further comprises the steps of:

- identifying the model equation(s) which means defining the coefficients of said linear function(s) and the coefficients defining the nonlinear function(s), by minimizing the errors of the model equation(s) at every data sample while taking into account the flattening of said model equations(s), whereby the errors to be minimized in said model equation(s) are defined by substituting the values of the process variable(s) or/and variable(s) derived therefrom to the equation(s), wherein the flattening of model equation(s) is achieved by minimizing the sum of total curvatures of the said nonlinear function(s) taken with nonnegative weights, wherein said minimization of the errors of the model equation(s) together with the said sum of total curvatures is performed under the said constraints imposed both on the coefficients defining said nonlinear function(s) which represent the monotonousness conditions for said nonlinear function(s) with respect to their input(s) and on the signs of the coefficients of the linear function(s) involved to said model equation(s) and

- adjusting the operation of at least a part of the flow (F) network and/or the process control, according to the said identified model equations.

9. A method according to claim 8 for controlling and /or optimizing of a flow (F) network controlled by valves (V), which may also include other devices such as pipes, pumps, tanks (T) and chemical reactors, wherein the method comprises at least the following steps:

- for identifying the structure of said flow (F) network is used at least one model equation representing the mass balance(s) of different part(s) of said flow (F) network which contains at least one function selected from the group comprising linear function(s) of the process variable(s) or/and variable(s) derived therefrom and nonlinear function(s), involving up to three process variables or/and variables derived therefrom, which are inputs of said nonlinear function(s), provided that at least one of said model equation(s) contains at least one said nonlinear function,

wherein the linear functions involved to the said model equations represent the flow (F) measurements and/or derivatives of the tank (T) levels and/or variables reflecting the amount of the chemical substance in tanks (T) and pipes involved to the said flow (F) network wherein some or all or none of the coefficients of the said linear function(s) can be fixed to properly represent the mass balances,

- imposing the conditions on some or all or none of the signs of the coefficients of the linear function(s) involved to said model equation(s) to properly represent the mass balances,

wherein at least one of the said nonlinear functions involved to said model equation(s) correspond the operation of valves (V) in said flow (F) network, wherein said inputs of nonlinear function are the degree of opening of the respective valve (V) and the pressure (p) measured before and after the respective valve or variables derived therefrom, wherein the value of a nonlinear function involved to the model equations represent the flow through the related valve (V), wherein each nonlinear function may be involved into more than one model equation and wherein each nonlinear function is defined as weighted sum of products of basis functions of its input(s), wherein said weights of products are the coefficients defining the nonlinear function(s) and wherein a set of basis functions is selected for each input of said nonlinear function(s) before the identification of model equation(s),

- imposing the conditions on some or all or none of the nonlinear functions involved in said model equation(s) to monotonously increase or decrease with respect to some or all input(s) of said nonlinear function(s), and said conditions are converted to the constraints imposed on said coefficients defining said nonlinear function(s), wherein the said conditions are imposed on the nonlinear functions according to properties of valves (V) or/and other equipments, in particular the flow through a valve (V) increases with respect to the degree of valve (V) opening and the pressure (P) before the valve (V), and the flow (F) decreases with respect to the pressure after the valve (V),

- collecting measured values for all process variable(s) and computing the values of all variable(s) derived therefrom, involved to the model equation(s) for achieving a set of data samples, wherein each data sample is a collection of values of all said process variable(s) or/and of variable(s) derived therefrom at a fixed moment,

- identifying the model equation(s) which means defining the coefficients of said linear function(s) and the coefficients defining the nonlinear function(s), by minimizing the errors of the model equation(s) at every data sample while taking into account the flattening of said model equations(s), whereby the errors to be minimized in said model equation(s) are defined by substituting the values of the process variable(s) or/and variable(s) derived therefrom to the equation(s), wherein the flattening of model equation(s) is achieved by minimizing the sum of total curvatures of the said nonlinear function(s) taken with nonnegative weights, wherein said minimization of the errors of the model equation(s) together with the said sum of total curvatures is performed under the said constraints imposed both on the coefficients defining said nonlinear function(s) which represent the monotonousness conditions for said nonlinear function(s) with respect to their input(s) and on the signs of the coefficients of the linear function(s) involved to said model equation(s) and
- adjusting the operation of at least a part of the flow (F) network and/or the process control, according to the said identified model equations.

10. The method according to any of the previous claims wherein model equation or a set of model equations is/are of general formula (1):

$$\sum_{i=1}^{k} a_i x_i + \sum_{i=1}^{l} F_i^1(x_i^1) + \sum_{i=1}^{m} F_i^2(x_i^2, y_i^2) + \sum_{i=1}^{n} F_i^3(x_i^3, y_i^3, z_i^3) = 0$$

(1)

where $k$ is the number of process variables or/and variables derived therefrom involved to the general equation (1) linearly with coefficients $a_i$, wherein some or all or none of the said coefficients $a_i$ can be fixed, *each variable (x, y, z)* means independently from each other a process variable or a variable derived thereof, which variables (x,y,z) are the inputs of nonlinear functions $F$,

variables $l$, $m$ and $n$ are the numbers of nonlinear functions $F$ involving one, two and three input(s) respectively, wherein each nonlinear function may be involved to more than one model equation (1) and wherein the nonlinear function(s) involved in model equation(s) (1) are defined as weighted sum(s) of products of basis functions, preferably one-dimensional basis functions of inputs of said nonlinear functions, as it is defined by equations (2-4) for one, two and three dimensional nonlinear functions ($F^1$, $F^2$, $F^3$) respectively:

$$F^1(x) = \sum_{i=1\ldots p} b_i g_i^x(x) ,$$

(2)

$$F^2(x, y) = \sum_{i=1\ldots p} \sum_{j=1\ldots q} b_{i,j} g_i^x(x) g_j^y(y) ,$$

(3)

$$F^3(x, y, z) = \sum_{i=1\ldots p} \sum_{j=1\ldots q} \sum_{l=1\ldots r} b_{i,j,k} g_i^x(x) g_j^y(y) g_k^z(z) ,$$

(4)

where $b_i$, $b_{ij}$ and $b_{ijk}$ are the coefficients defining the nonlinear function(s), and $p$, $q$, and $r$ are the number of said basis functions $g_i^x$, $g_j^y$ and $g_k^z$ related to process variables $x$, $y$ and $z$ respectively,

- imposing the conditions on some or all or none of the nonlinear functions $F$ involved in equation(s) (1) to monotonously increase or decrease with respect to some or all inputs (x, y, z) of said nonlinear function(s), and said conditions are converted to the constraints imposed on the coefficients $b_i$, $b_{ij}$ and $b_{ijk}$,
- imposing the conditions on some or all or none of the signs of the coefficients of the linear functions involved to said model equation(s),
- collecting measured values for all process variable(s) and computing the values of all variable(s) derived therefrom, involved to the model equation(s) for achieving a set of data samples, wherein each data sample is a collection of values of all said process variable(s) or/and of variable(s) derived therefrom at a fixed moment,
- identifying the model equation(s) which means determining the coefficients $a_i$ and $b_i$, $b_{ij}$ and $b_{ijk}$ involved to equation(s) (1) according to the definition of the non-linear functions (2-4) by minimizing the errors of the model equation(s) (1) at every data sample, according to equation (5)

$$\min\left[\sum_{i=1}^{N} \sum_{k=1}^{M} \alpha_k f(e_{ik}) + \sum_{i=1}^{L} \beta_i C_i\right]$$

$$(5)$$

wherein $N$ is the number of data samples, $M$ is the number of model equations of general formula (1), $e_{ik}$ is the error of equation $k$ computed by substituting the values of the process variables or/and variables derived therefrom of data sample $i$ to the left side part of equation $k$, $\alpha_k$ is a non-negative coefficient defining the relative weight of equation $k$, $f$ is any loss function describing the penalty incurred by the identification procedure, $\beta_i$ are non-negative parameters defining the desired strength of model flattening, $L$ is the number of different nonlinear functions involved to the model equation(s), and $C_i$ is the total curvature of the nonlinear function number $i$, wherein the minimization (5) is performed under said constraints imposed on the model coefficients $a_i$ and $b_i$, $b_{ij}$ and $b_{ijk}$ representing the monotonousness conditions for the nonlinear functions with respect to their inputs,
- adjusting the operation of at least one part of the flow (F) network and/or the process control, according to the said identified equations or
- selection of the fault detection thresholds for some or all said identified equation(s),
- computing the errors of said identified model equations by substituting the current values of the process variables or/and variables derived therefrom to the said model equation(s),
- evaluating said errors of the identified model equations against the respective fault detection thresholds, and detecting faults in the flow network or in a part of it and possible
- diagnosing the fault location.

11. The method according to claim 10 wherein the adjusting of the operation of a flow (F) network is based on some or all of the model equations which reflect the common properties of said flow (F) network, including the structure of the nonlinearity of the network or a part of it and monotonous character of the dependences between the process variables wherein said model equation(s) provide reliable estimations under unexplored operational conditions.

12. The method according to claim 10 or 11, wherein the loss function for evaluating error in equation (5) is selected from the group consisting of squaring function, absolute value function, Huber function, Bisquare function and L1-L2 function.

13. The method according to any of the claims 10 - 12 wherein the nonlinear functions involved in model equation(s) (1) are defined as weighted sums of products of piecewise linear or piecewise quadratic basis functions $g_i^x$, $g_j^y$ and $g_k^z$, wherein

    - the piecewise linear basis functions are defined according to equation (6):

$$g_i^t(t) = \begin{cases} (t - t_{i-1})/(t_i - t_{i-1}) \; if \; t_{i-1} \le t < t_i \\ (t_{i+1} - t)/(t_{i+1} - t_i) \; if \; t_i \le t < t_{i+1}, \; \text{for } i = 2... \; p\text{-}1 \\ 0, otherwise \end{cases}$$

$$g_1^t(t) = \begin{cases} (t_2 - t)/(t_2 - t_1) \; if \; t_1 \le t < t_2 \\ 0, otherwise \end{cases}$$

$$g_p^t(t) = \begin{cases} (t - t_{p-1})/(t_p - t_{p-1}) \; if \; t_{p-1} \le t < t_p \\ 0, otherwise \end{cases}$$

$$(6)$$

- the piecewise-quadratic basis functions are defined according to equation (7):

$$g_i^t = \begin{cases} (t - t_{i-1})^2/(t_i - t_{i-1}), if \; t_{i-1} \le t < t_i \\ t_{i+1} - t_{i-1} - (t_{i+1} - t)^2/(t_{i+1} - t_i), if \; t_i \le t < t_{i+1} \\ t_{i+1} - t_{i-1}, if \; t_{i+1} \le t \\ 0, if \; t < t_{i-1} \end{cases} \quad \text{for } i = 2, ..., p$$

$$g_1^t(t) = \begin{cases} t_2 - t_1 - (t_2 - t)^2/(t_2 - t_1) \; if \; t_1 \le t < t_2 \\ t_2 - t_1, otherwise \end{cases}$$

$$g_p^t(t) = \begin{cases} (t - t_{p-1})^2/(t_p - t_{p-1}) \; if \; t_{p-1} \le t < t_p \\ 0, otherwise \end{cases}$$

$$g_{p+1}(t) = 1,$$

$$(7)$$

wherein $t$ denotes one of the process variables x, y, z, and $t_i$, $i = 1,...,p$ is the grid related to that process variable x, y or z.

**14.** The method according to any of the claims 10 - 13 wherein the coefficients $a_i$, $b_i$, $b_{ij}$ and $b_{ijk}$ involved in model equations (1)-(4) are determined by minimizing the sum of the term, representing the errors of every equation at every data sample, and the flattening term representing the scaled sum of the total curvatures of the nonlinear terms involved to the model equations, according to equation (8) and under the said constraints on the model coefficients representing the monotonousness conditions,

$$\min\left[\sum_{i=1}^N \sum_{k=1}^M \alpha_k f(e_{ik}) + \sum_{i=1}^L \beta_i C_i\right]$$

$$(8)$$

wherein $N$ is the number of data samples, $M$ is the number of model equations of general form (1), $e_{ik}$ is the error of equation $k$ for data sample $i$, $f$ is any loss function describing the penalty incurred by the identification procedure of model equation, $\alpha_k$ is a non-negative coefficient defining the relative weight of equation $k$, $\beta_i$ are nonnegative parameters defining the desired strength of model flattening, $L$ is the number of different nonlinear functions involved to the model equation(s), and $C_i$ is the total curvature of nonlinear function number $i$ defined as the sum of local curvatures of nonlinear function $i$ computed at the inner points of the one, two or three dimensional grids defined for one, two and three dimensional nonlinear functions according to equations (9-11):

$$x_i, i = 2, \ldots, p - 1$$

$$(9)$$

$$(x_i, y_j), i = 2, \ldots, p - 1, j = 2, \ldots, q - 1$$

$$(10)$$

$$(x_i, y_j, z_k), i = 2, \ldots, p - 1, j = 2, \ldots, q - 1, k = 2, \ldots, r\text{-}1,$$

$$(11)$$

where $p$, $q$, and $r$ are the number of nodes in the grids related to variables x, y and z, wherein said local curvatures are computed as the sums of squared second order divided differences according to equations (12-14):

$$\Delta b_i = \left( \left( \frac{b_{i+1} - b_i}{x_{i+1} - x_i} - \frac{b_i - b_{i-1}}{x_i - x_{i-1}} \right) / \left( \frac{x_{i+1} - x_{i-1}}{2} \right) \right)^2$$

$$(12)$$

$$\Delta b_{i,j} = \left( \left( \frac{b_{i+1,j} - b_{i,j}}{x_{i+1} - x_i} - \frac{b_{i,j} - b_{i-1,j}}{x_i - x_{i-1}} \right) / \left( \frac{x_{i+1} - x_{i-1}}{2} \right) \right)^2 + \left( \left( \frac{b_{i,j+1} - b_{i,j}}{y_{j+1} - y_j} - \frac{b_{i,j} - b_{i,j-1}}{y_j - y_{j-1}} \right) / \left( \frac{y_{j+1} - y_{j-1}}{2} \right) \right)^2,$$

$$(13)$$

$$\Delta b_{i,j,k} = \left( \left( \frac{b_{i+1,j,k} - b_{i,j,k}}{x_{i+1} - x_i} - \frac{b_{i,j,k} - b_{i-1,j,k}}{x_i - x_{i-1}} \right) / \left( \frac{x_{i+1} - x_{i-1}}{2} \right) \right)^2 + \left( \left( \frac{b_{i,j+1,k} - b_{i,j,k}}{y_{j+1} - y_j} - \frac{b_{i,j,k} - b_{i,j-1,k}}{y_j - y_{j-1}} \right) / \left( \frac{y_{j+1} - y_{j-1}}{2} \right) \right)^2 + \left( \left( \frac{b_{i,j,k+1} - b_{i,j,k}}{z_{j+1} - z_j} - \frac{b_{i,j,k} - b_{i,j,k-1}}{z_j - z_{j-1}} \right) / \left( \frac{z_{j+1} - z_{j-1}}{2} \right) \right)^2.$$

$$(14)$$

15. The method according to any of the previous claims 8 - 14 for optimization of the steady-state operational conditions of the flow (F) network, including

- finding the new operational conditions on the basis of the identified model equations (1),
- driving the flow (F) network to said new operational conditions by adjusting some or all or none of the input process variables which are not used by the process control and the target values (setpoints) of some or all or none of the controlled process variables or derivatives thereof, wherein said input process variables are the variables which affect the operational conditions, such as degrees of valve (V) opening, pump load.

16. The method according to claim 15 for optimization of the flow (F) network which method further consists of estimating the bias of the said identified model equation(s) using the current process data, wherein the bias is the systematic error of the model equations due to process disturbances and/or modeling error under unexplored operational conditions.

17. The method according to any of the claims 8-14 for adaptive controlling of the flow (F) network including

- substituting the current values of the process variables or/and variables derived therefrom to said identified equations (1) for computing the gains of the responses of the manipulated variables of the controllers on the controlled variables, wherein a controller is a device or a computer program which monitors its controlled variable(s) and affects the operational conditions of the flow network by adjusting the values of the manipulated variable(s) of the controller,
- adjusting the parameters of all or some or none of the controllers, which do not rely on a process model, including the feed-forward controllers, the proportional controllers, the proportional-integral controllers, the proportional-integral-derivative controllers, wherein the parameters of said controllers are updated according to the current values of said gains of the responses of the manipulated variables on the controlled variables,
- adjusting all or some or none of the model-based controllers, including model predictive controllers, by scaling the models utilized by said controllers according to the said gains of the responses of the manipulated variables of the controllers on their controlled variables.

18. The method according to any previous claim, wherein the flow (F) network is the steam-water network of the drying section of a paper or a board machine containing control valves (V).

19. A computer readable means containing a computer readable storage medium comprising instruction to cause a data-processing system to carry out a method characterized thereof that said method is according to any of the previous claims to be used for detecting faults or controlling and /or optimization of a flow network controlled by valves (V) or a flow (F) network with chemical reaction(s)or a part of it.


**Patentansprüche**

1. Verfahren zum Erfassen von Defekten in einem Fluss (F) -Netzwerk, das durch Ventile (V) gesteuert wird, oder in einem Teil davon, wobei das Fluss (F) -Netzwerk bezüglich mindestens einer Prozessvariablen nichtlinear ist, wobei das Verfahren mindestens folgende Schritte umfasst:

- zum Identifizieren der Struktur des Fluss (F) - Netzwerks wird mindestens eine Modellgleichung verwendet, welche mindestens eine Funktion enthält, die aus der Gruppe umfassend (eine) lineare Funktion(en) der Prozessvariable(n) oder/und Variable(n), die davon abgeleitet ist/sind, und (eine) nichtlineare Funktion(en), ausgewählt wird, wobei einige oder alle oder keine der Koeffizienten der linearen Funktion(en) festgelegt werden können, wobei jede nichtlineare Funktion an mehr als einer Modellgleichung beteiligt sein kann
- Auferlegen der Bedingungen auf einige oder alle oder keine der nichtlinearen Funktionen, die an der/den Modellgleichung(en) beteiligt sind, zum monotonen Erhöhen oder Verringern bezüglich einiger oder aller Eingaben der nichtlinearen Funktion(en), und die Bedingungen werden in die Beschränkungen umgewandelt, die auf die Koeffizienten auferlegt werden, die die nichtlineare(n) Funktion(en) definieren,
- Auferlegen der Bedingungen auf einige oder alle oder keine der Zeichen der Koeffizienten der linearen Funktion(en), die an der/den Modellgleichung(en) beteiligt sind
- Sammeln von gemessenen Werten für alle Prozessvariablen und Berechnen der Werte aller Variablen, die davon abgeleitet sind, die an der/den Modelgleichung(en) beteiligt sind, um eine Gruppe von Datenabtastwerten zu erreichen, wobei jeder Datenabtastwert eine Sammlung von Werten aller der Prozessvariablen oder/und Variablen, die davon abgeleitet sind, in einem festgelegten Moment ist,

**dadurch gekennzeichnet, dass**:

bis zu drei Prozessvariablen oder/und Variablen, die davon abgeleitet sind, beteiligt sind, welche Eingaben von der/den nichtlinearen Funktion(en) sind, vorausgesetzt, mindestens eine der Modellgleichung(en) enthält mindestens die eine nichtlineare Funktion,
jede nichtlineare Funktion als gewichtete Summe von Produkten von Basisfunktionen ihrer Eingabe(n) definiert ist, wobei die Gewichtungen von Produkten die Koeffizienten sind, die die nichtlineare(n) Funktion(en) definieren, und wobei eine Gruppe von Basisfunktionen für jede Eingabe der nichtlinearen Funktion(en) vor der Identifikation der Modellgleichung(en) ausgewählt wird, und

wobei das Verfahren ferner folgende Schritte umfasst:

- Identifizieren der Modellgleichung(en), was das Definieren der Koeffizienten der linearen Funktion(en) und der Koeffizienten, die die nichtlineare(n) Funktion(en) definieren, bedeutet, durch Minimieren der Fehler der Modellgleichung(en) bei jedem Datenabtastwert, während das Glätten der Modellgleichung(en) berücksichtigt wird, wobei die in der/den Modellgleichung(en) zu minimierenden Fehler durch Einsetzen der Werte der Prozessvariable(n) oder/und Variable(n), die davon abgeleitet ist/sind, in der/den Gleichung(en) erreicht wird, wobei das Glätten der Modellgleichung(en) durch Minimieren der Summe der Gesamtkrümmungen der nichtlinearen Funktion(en) zusammen mit nichtnegativen Gewichtungen erreicht wird, wobei die Minimierung der Fehler der Modellgleichung(en) zusammen mit der Summe der Gesamtkrümmungen unter den Beschränkungen durchgeführt wird, die sowohl auf die Koeffizienten, die die nichtlineare(n) Funktion(en) definieren, welche die Eintönigkeitsbedingungen für die nichtlineare(n) Funktion(en) bezüglich ihrer Eingabe(n) darstellen, als auch auf die Zeichen der Koeffizienten der linearen Funktion(en), die an den Modellgleichung(en) beteiligt ist/sind, auferlegt werden,
- Auswählen der Defekterfassungsschwellenwerte für mindestens eine identifizierte Modellgleichung,
- Berechnen der Fehler der identifizierten Modellgleichung(en) durch Einsetzen der aktuellen Werte der Prozessvariablen oder Variablen, die davon abgeleitet sind, in der/den Gleichung(en),
- Auswerten der Fehler der identifizierten Modellgleichung(en) gegenüber den jeweiligen Defekterfassungsschwellenwerten, und Erfassen von Defekten in dem Flussnetzwerk oder in einem Teil davon.

2. Verfahren nach Anspruch 1 zum Erfassen von Defekten, Diagnostizieren des Defektorts und/oder Korrigieren der Auswirkungen der Defekte in einem Fluss (F) - Netzwerk mit chemischer/chemischen Reaktion(en) oder einem Teil davon, wobei das Fluss (F) -Netzwerk mit chemischer/chemischen Reaktion(en) bezüglich mindestens einer Prozessvariablen nichtlinear ist, wobei sich die Modellgleichungen auf die Massengleichgewichte, die Energiegleichgewichte und die Raten von chemischen Reaktionen beziehen, wobei einige oder alle oder keine der Koeffizienten der linearen Funktionen gemäß der Massengleichgewichte, der Energiegleichgewichte oder anderen physikalischen oder chemischen Erscheinungen in dem Fluss (F) - Netzwerk mit chemischer/chemischen Reaktion(en) festgelegt werden können, wobei

- die Modellgleichung(en), die sich auf die Massengleichgewichte bezieht/beziehen, aus linearen Funktionen, welche insbesondere die Fluss (F) -Messungen, Variablen, die die Änderungsrate der Substanzmasse in Behältern (T), die an dem Fluss (F) -Netzwerk beteiligt sind, mit chemischer/chemischen Reaktion(en) widergeben, darstellen, und den nichtlinearen Funktionen, welche insbesondere Flüsse (F) durch Prozessgeräte, wie zum Beispiel Ventile (V) und Pumpen und/oder Kombinationen davon, darstellen, besteht/bestehen,
- die Modellgleichung(en), die sich auf die Energiegleichgewichte bezieht/beziehen, aus linearen Funktionen, welche insbesondere den/die Energiefluss/Energieflüsse darstellen, Variablen, die die Änderungsrate der Energie, die in den Behältern (T), die an dem Flussnetzwerk beteiligt sind, gespeichert ist, mit chemischer/chemischen Reaktion(en) widergeben, und den nichtlinearen Funktionen, welche insbesondere die Energie darstellen, die durch die chemischen Reaktionen und Wärmetauscherscheinungen in dem Fluss (F) - Netzwerk mit chemischer/chemischen Reaktion(en) freigegeben/verbraucht wird, besteht/bestehen,
- die Modellgleichung(en), die sich auf die Geschwindigkeit von chemischen Reaktionen bezieht/beziehen, aus linearen Funktionen, welche die Konzentrationen und/oder Flüsse (F) von chemischen Verbindungen darstellen, und den nichtlinearen Funktionen, die diverse chemische Reaktoren darstellen, besteht/bestehen, wobei die Eingaben einer nichtlinearen Funktion aus den Eigenschaften der Eingangsflüsse in den Reaktor, dem Druck (p) und der Temperatur in dem Reaktor und der Verweilzeit der Substanz in dem Reaktor oder/und Variablen, die davon abgeleitet sind, ausgewählt werden.

3. Verfahren nach den Ansprüchen 1 oder 2 zum Erfassen von Defekten in einem Fluss (F) -Netzwerk, das durch Ventile (V) gesteuert wird, welches auch andere Geräte, wie zum Beispiel Rohre, Pumpen, Behälter (T) und chemische Reaktoren, umfassen kann, wobei das Verfahren mindestens folgende Schritte umfasst:

- zum Identifizieren der Struktur des Fluss (F) - Netzwerks wird mindestens eine Modellgleichung verwendet, die das/die Massengleichgewicht(e) von (einem) verschiedenen Teil(en) des Fluss (F) - Netzwerks darstellt, welche mindestens eine Funktion enthält, die aus der Gruppe umfassend (eine) lineare Funktion(en) der Prozessvariable(n) oder/und (eine) Variable(n), die davon abgeleitet ist/sind, und (eine) nichtlineare Funktion(en), die bis zu drei Prozessvariablen oder/und Variablen, die davon abgeleitet sind, umfasst/umfassen, welche Eingaben der nichtlinearen Funktion(en) sind, ausgewählt ist, vorausgesetzt, mindestens eine der Modellgleichung(en) enthält mindestens die eine nichtlineare Funktion,

wobei die linearen Funktionen, die an den Modellgleichungen beteiligt sind, die Fluss (F) - Messungen und/oder Ableitungen der Behälter (T) -Pegel und/oder Variablen, die die Menge der chemischen Substanz in Behältern (T) und Rohren, die an dem Fluss (F) -Netzwerk beteiligt sind, widergeben, darstellen, wobei einige oder alle oder keine der Koeffizienten der linearen Funktion(en) festgelegt werden können, um die Massengleichgewichte angemessen darzustellen

- Auferlegen der Bedingungen auf einige oder alle oder keine der Zeichen der Koeffizienten der linearen Funktion(en), die an der/den Modellgleichung(en) beteiligt sind, um die Massengleichgewichte angemessen darzustellen,

wobei mindestens eine der nichtlinearen Funktionen, die an der/den Modellgleichung(en) beteiligt sind, dem Betrieb der Ventile (V) in dem Fluss (F) -Netzwerk entspricht, wobei die Eingaben der nichtlinearen Funktion der Öffnungsgrad des jeweiligen Ventils und der Druck, der vor und nach dem jeweiligen Ventil gemessen wird, oder Variablen, die davon abgeleitet sind, sind, wobei der Wert einer nichtlinearen Funktion, die an den Modellgleichungen beteiligt ist, den Fluss durch das zugehörige Ventil (V) darstellt, wobei jede nichtlineare Funktion an mehr als einer Modellgleichung beteiligt sein kann, und wobei jede nichtlineare Funktion als gewichtete Summe von Produkten von Basisfunktionen ihrer Eingabe(n) definiert ist, wobei die Gewichtungen von Produkten die Koeffizienten sind, die die nichtlineare(n) Funktion(en) definieren, und wobei eine Gruppe von Basisfunktionen für jede Eingabe der nichtlinearen Funktion(en) vor der Identifikation der Modellgleichung(en) ausgewählt wird

- Auferlegen der Bedingungen auf einige oder alle oder keine der nichtlinearen Funktionen, die an der/den Modellgleichung(en) beteiligt sind, zum monotonen Erhöhen oder Verringern bezüglich einiger oder aller Eingaben der nichtlinearen Funktion(en), und die Bedingungen werden in die Beschränkungen umgewandelt, die auf die Koeffizienten auferlegt werden, die die nichtlineare(n) Funktion(en) definieren, wobei die Bedingungen auf die nichtlinearen Funktionen gemäß Eigenschaften von Ventilen oder/und anderen Ausrüstungen auferlegt werden, insbesondere erhöht sich der Fluss (F) durch ein Ventil (V) bezüglich des Grads der Ventilöffnung und des Drucks vor dem Ventil, und verringert sich der Fluss bezüglich des Drucks (P) nach dem Ventil
- Sammeln von gemessenen Werten für alle Prozessvariablen und Berechnen der Werte aller Variablen, die davon abgeleitet sind, die an der/den Modellgleichung(en) beteiligt sind, um eine Gruppe von Datenabtastwerten zu erreichen, wobei jeder Datenabtastwert eine Sammlung von Werten aller Prozessvariable oder/und von Variable(n), die davon abgeleitet ist/sind, in einem festgelegten Moment ist,
- Identifizieren der Modellgleichung(en), was das Definieren der Koeffizienten der linearen Funktion(en) und der Koeffizienten, die die nichtlineare(n) Funktion(en) definieren, bedeutet, durch Minimieren der Fehler der Modellgleichung(en) bei jedem Datenabtastwert, während das Glätten der Modellgleichung(en) berücksichtigt wird, wobei die zu minimierenden Fehler in der/den Modellgleichung(en) durch Einsetzen der Werte der Prozessvariable(n) oder/und Variable(n), die davon abgeleitet ist/sind, in der/den Gleichung(en) definiert sind, wobei das Glätten der Modellgleichung(en) durch Minimieren der Summe der Gesamtkrümmungen der nichtlinearen Funktion(en) zusammen mit nicht-negativen Gewichtungen erreicht wird, wobei die Minimierung der Fehler der Modellgleichung(en) zusammen mit der Summe der Gesamtkrümmungen unter den Beschränkungen durchgeführt wird, die sowohl auf die Koeffizienten, die die nichtlineare(n) Funktion(en) definieren, welche die Eintönigkeitsbedingungen für die nichtlineare(n) Funktion(en) bezüglich ihrer Eingabe(n) darstellen, als auch auf die Zeichen der Koeffizienten der linearen Funktion(en), die an der/den Modellgleichung(en) beteiligt ist/sind, auferlegt werden,
- Auswählen der Defekterfassungsschwellenwerte für mindestens eine identifizierte Modellgleichung,
- Berechnen der Fehler der identifizierten Modellgleichung(en) durch Einsetzen der aktuellen Werte der Prozessvariablen oder Variablen, die davon abgeleitet sind, in der/den Gleichung(en),
- Auswerten der Fehler der identifizierten Modellgleichung(en) gegenüber den jeweiligen Defekterfassungsschwellenwerten, und Erfassen der Defekte in dem Fluss (F) -Netzwerk oder in einem Teil davon, wobei die Zeichen der Fehler der Modellgleichungen verwendet werden können, um Leckagen und Blockagen von Ventilen (V) und Rohren zu unterscheiden.

4. Verfahren nach Anspruch 1, 2 oder 3, wobei zum Identifizieren der Struktur des Fluss (F) -Netzwerks, das durch Ventile (V) gesteuert wird, zusätzlich andere Gleichungen als die in Anspruch 1, 2 oder 3 definierten Modellgleichungen verwendet werden.

5. Verfahren nach Anspruch 1, 2, 3 oder 4, das zusätzlich den Schritt des Diagnostizierens des Defektorts umfasst, wenn ein Defekt in dem Fluss (F) -Netzwerk, das durch Ventile (V) gesteuert wird, oder in einem Teil davon, erfasst wird, durch

- Entwickeln einer binären Restdefektereignismatrix auf Grundlage der Modellgleichung(en) und der Kenntnis der Auswirkungen der Defekte in Fluss (F) -Netzwerkteilen oder -Geräten,
- Erhalten des aktuellen binären Musters, das die Ergebnisse der Auswertung der Fehler der Modellgleichung(en) gegenüber den jeweiligen Defekterfassungsschwellenwerten enthält,
- Identifizieren des Orts des Defekts auf Grundlage des Vergleichs des aktuellen Musters mit den Defektmustern, die in der Restdefektereignismatrix enthalten sind.

6. Verfahren nach Anspruch 5, das ferner einen Schritt des Korrigierens der Auswirkungen von Defekten in einem Fluss (F) -Netzwerk, das durch Ventile (V) gesteuert wird, oder in einem Teil davon, umfasst, wenn der Ort des aktuellen Defekts in dem Fluss (F) - Netzwerk diagnostiziert wird.

7. Verfahren nach Anspruch 6, umfassend das Auswählen und Anwenden einer korrigierenden Handlung in dem Fluss (F) -Netzwerk, das durch Ventile (V) gesteuert wird, einschließlich des Herunterfahrens des Prozesses, des zuverlässigen Betriebs des Fluss (F) -Netzwerks oder eines Teils davon bei neuen Betriebsbedingungen, der Neukonfiguration des Fluss (F) -Netzwerks oder eines Teils davon unter Verwendung von Sensoren, Aktuatoren oder redundanten Komponenten, um die Betriebsbedingungen unverändert zu halten, und der Wartung des Fluss (F) -Netzwerks durch Austauschen von fehlerhaften Teilen des Fluss (F) -Netzwerks oder Geräten davon.

8. Verfahren zum Steuern und/oder Optimieren eines Fluss (F) -Netzwerks, das durch Ventile (V) gesteuert wird, oder eines Teils davon, wobei das Fluss (F) -Netzwerk bezüglich mindestens einer Prozessvariablen nichtlinear ist, wobei das Verfahren mindestens folgende Schritte umfasst:

- zum Identifizieren der Struktur des Fluss (F) - Netzwerks wird mindestens eine Modellgleichung verwendet, welche mindestens eine Funktion enthält, die aus der Gruppe umfassend (eine) lineare Funktion(en) der Prozessvariable(n) oder/und Variable(n), die davon abgeleitet ist/sind, und (eine) nichtlineare Funktion(en) ausgewählt wird,

wobei einige oder alle oder keine der Koeffizienten der linearen Funktion(en) festgelegt werden können, wobei jede nichtlineare Funktion an mehr als einer Modellgleichung beteiligt sein kann,

- Auferlegen der Bedingungen auf einige oder alle oder keine der nichtlinearen Funktionen, die an der/den Modellgleichung(en) beteiligt sind, zum monotonen Erhöhen oder Verringern bezüglich einiger oder aller Eingaben der nichtlinearen Funktion(en), und die Bedingungen werden in die Beschränkungen umgewandelt, die auf die Koeffizienten auferlegt werden, die die nichtlineare(n) Funktion(en) definieren,
- Auferlegen der Bedingungen auf einige oder alle oder keine der Zeichen der Koeffizienten der linearen Funktion(en), die an der/den Modellgleichung(en) beteiligt sind
- Sammeln der gemessenen Werte für alle Prozessvariablen und Berechnen der Werte aller Variablen, die davon abgeleitet sind, die an der/den Modellgleichung(en) beteiligt sind, um eine Gruppe von Datenabtastwerten zu erreichen, wobei jeder Datenabtastwert eine Sammlung von Werten aller Prozessvariablen oder/und Variablen, die davon abgeleitet sind, in einem festgelegten Moment ist,

**dadurch gekennzeichnet, dass**:

bis zu drei Prozessvariablen oder/und Variablen, die davon abgeleitet sind, beteiligt sind, welche Eingaben der nichtlinearen Funktion(en) sind, vorausgesetzt, mindestens eine der Modellgleichung(en) enthält mindestens die eine nichtlineare Funktion,
jede nichtlineare Funktion als gewichtete Summe von Produkten von Basisfunktionen ihrer Eingabe(n) definiert ist, wobei die Gewichtungen von Produkten die Koeffizienten sind, die die nichtlineare(n) Funktion(en) definieren, und wobei eine Gruppe von Basisfunktionen für jede Eingabe der nichtlinearen Funktion(en) vor der Identifikation der Modellgleichung(en) ausgewählt wird, und
wobei das Verfahren ferner folgende Schritte umfasst:

- Identifizieren der Modellgleichung(en), was das Definieren der Koeffizienten der linearen Funktion(en) und der Koeffizienten, die die nichtlineare(n) Funktion(en) definieren, durch Minimieren der Fehler der Modellgleichung(en) bei jedem Datenabtastwert bedeutet, während das Glätten der Modellgleichung(en) berücksichtigt wird, wobei die in der/den Modellgleichung(en) zu minimierenden Fehler durch Einsetzen der Werte der Prozessvariable (n) oder/und Variable(n), die davon abgeleitet ist/sind, in der/den Gleichung(en) definiert sind, wobei das Glätten der Modellgleichung(en) durch Minimieren der Summe der Gesamtkrümmungen der nichtlinearen Funktion(en) zusammen mit nicht-negativen Gewichtungen erreicht wird, wobei die Minimierung der Fehler der Modellgleichung(en) zusammen mit der Summe der Gesamtkrümmungen unter den Beschränkungen durchgeführt wird, die sowohl auf die Koeffizienten, die die nichtlineare(n) Funktionen definieren, welche die Eintönigkeitsbedingungen für die nichtlineare(n) Funktion(en) bezüglich ihrer Eingabe(n) darstellen, als auch auf die Zeichen der Koeffizienten der linearen Funktion(en), die an der/den Modellgleichung(en) beteiligt ist/sind, auferlegt werden, und
- Einstellen des Betriebs von mindestens einem Teil des Fluss (F) -Netzwerks und/oder der Prozesssteuerung gemäß der identifizierten Modellgleichungen.

9. Verfahren nach Anspruch 8 zum Steuern und/oder Optimieren eines Fluss (F) -Netzwerks, das durch Ventile (V) gesteuert wird, welches auch andere Geräte, wie zum Beispiel Rohre, Pumpen, Behälter (T) und chemische Reaktoren, umfassen kann, wobei das Verfahren mindestens folgende Schritte umfasst:

- zum Identifizieren der Struktur des Fluss (F) - Netzwerks wird mindestens eine Modellgleichung verwendet, die das/die Massengleichgewicht(e) von (einem) verschiedenen Teil(en) des Fluss (F) - Netzwerks darstellt, welche mindestens eine Funktion enthält, die aus der Gruppe umfassend (eine) lineare Funktion(en) der Prozessvariable(n) oder/und Variable(n), die davon abgeleitet ist/sind, und (eine) nichtlineare Funktion(en) ausgewählt ist, die bis zu drei Prozessvariablen oder/und Variablen, die davon abgeleitet sind, umfasst, welche Eingaben der nichtlinearen Funktion(en) sind, vorausgesetzt, mindestens eine der Modellgleichung(en) enthält mindestens die eine nichtlineare Funktion,

wobei die linearen Funktionen, die an den Modellgleichungen beteiligt sind, die Fluss (F) - Messungen und/oder Ableitungen der Behälter (T) -Pegel und/oder Variablen, die die Menge der chemischen Substanz in Behältern (T) und Rohren, die an dem Fluss (F) -Netzwerk beteiligt sind, widergeben, wobei einige oder alle oder keine der Koeffizienten der linearen Funktion(en) festgelegt werden können, um die Massengleichgewichte angemessen darzustellen,

- Auferlegen der Bedingungen auf einige oder alle oder keine der Zeichen der Koeffizienten der linearen Funktion(en), die an der/den Modellgleichung(en) beteiligt ist/sind, um die Massengleichgewichte angemessen darzustellen,

wobei mindestens eine der nichtlinearen Funktionen, die an der/den Modellgleichung(en) beteiligt sind, dem Betrieb von Ventilen (V) in dem Fluss (F) -Netzwerk entspricht, wobei die Eingaben der nichtlinearen Funktion der Grad der Öffnung des jeweiligen Ventils (V) und der Druck (p), der vor und nach dem jeweiligen Ventil gemessen wird, oder Variablen, die davon abgeleitet sind, sind, wobei der Wert einer nichtlinearen Funktion, die an den Modellgleichungen beteiligt ist, den Fluss durch das zugehörige Ventil (V) darstellt, wobei jede nichtlineare Funktion an mehr als einer Modellgleichung beteiligt sein kann, und wobei jede nichtlineare Funktion als gewichtete Summe von Produkten von Basisfunktionen ihrer Eingabe(n) definiert ist, wobei die Gewichtungen von Produkten die Koeffizienten sind, die die nichtlineare(n) Funktion(en) darstellen, und wobei eine Gruppe von Basisfunktionen für jede Eingabe der nichtlinearen Funktion(en) vor der Identifikation der Modellgleichung(en) ausgewählt wird,

- Auferlegen der Bedingungen auf einige oder alle oder keine der nichtlinearen Funktionen, die an der Modellgleichung(en) beteiligt sind, zum monotonen Erhöhen oder Verringern bezüglich einiger oder aller Eingaben der nichtlinearen Funktion(en), und die Bedingungen werden in die Beschränkungen umgewandelt, die auf die Koeffizienten auferlegt werden, die die nichtlineare(n) Funktion(en) definieren, wobei die Bedingungen auf die nichtlinearen Funktionen gemäß Eigenschaften von Ventilen (V) oder/und anderer Geräte auferlegt werden, insbesondere erhöht sich der Fluss durch ein Ventil (V) bezüglich des Grads der Öffnung des Ventils (V) und des Drucks (P) vor dem Ventil (V) und verringert sich der Fluss (F) bezüglich des Drucks nach dem Ventil (V),
- Sammeln von gemessenen Werten für alle Prozessvariablen und Berechnen der Werte aller Variablen, die davon abgeleitet sind, die an der/den Modellgleichung(en) beteiligt sind, um eine Gruppe von Datenabtastwerten zu erreichen, wobei jeder Datenabtastwert eine Sammlung von Werten aller Prozessvariablen oder/und der Variablen, die davon abgeleitet sind, in einem festgelegten Moment ist,
- Identifizieren der Modellgleichung(en), was das Definieren der Koeffizienten der linearen Funktion(en) und der Koeffizienten, die die nichtlineare(n) Funktion(en) definieren, bedeutet, durch Minimieren der Fehler der Modellgleichung(en) bei jedem Datenabtastwert, während das Glätten der Modellgleichung(en) berücksichtigt wird, wobei die zu minimierenden Fehler in der/den Modellgleichung(en) durch Einsetzen der Werte der Prozessvariable(n) oder/und Variable(n), die davon abgeleitet ist/sind, in der/den Gleichung(en) definiert sind, wobei das Glätten der Modellgleichung(en) durch Minimieren der Summe der Gesamtkrümmungen der nichtlinearen Funktion(en) zusammen mit nicht-negativen Gewichtungen erreicht wird, wobei die Minimierung der Fehler der Modellgleichung(en) zusammen mit der Summe der Gesamtkrümmungen unter den Beschränkungen durchgeführt wird, die sowohl auf die Koeffizienten, die die nichtlineare(n) Funktion(en) definieren, welche die Eintönigkeitsbedingungen für die nichtlineare(n) Funktion(en) bezüglich ihrer Eingabe(n) darstellen, als auch auf die Zeichen der Koeffizienten der linearen Funktion(en), die an der/den Modellgleichung(en) beteiligt ist/sind, auferlegt werden, und

- Einstellen des Betriebs von mindestens einem Teil des Fluss (F) -Netzwerks und/oder der Prozesssteuerung gemäß den identifizierten Modellgleichungen.

**10.** Verfahren nach einem der vorherigen Ansprüche, wobei die Modellgleichung oder eine Gruppe von Modellgleichungen von der allgemeinen Formel (1) ist/sind:

$$\sum_{i=1}^{k} a_i x_i + \sum_{i=1}^{l} F_i^1(x_i^1) + \sum_{i=1}^{m} F_i^2(x_i^2, y_i^2) + \sum_{i=1}^{n} F_i^3(x_i^3, y_i^3, z_i^3) = 0$$

$$(1)$$

wobei $k$ die Anzahl an Prozessvariablen oder/und Variablen, die davon abgeleitet sind, die an der allgemeinen Gleichung (1) linear mit den Koeffizienten $a_i$ beteiligt sind, ist, wobei einige oder alle oder keine der Koeffizienten $a_i$ festgelegt werden können, wobei jede Variable ($x, y, z$) unabhängig voneinander eine Prozessvariable oder eine Variable, die davon abgeleitet ist, bedeutet, wobei die Variablen ($x, y, z$) die Eingaben von nichtlinearen Funktionen $F$ sind, die Variablen $l, m$ und $n$ die Anzahlen von nichtlinearen Funktionen $F$ sind, die jeweils eine, zwei und drei Eingabe(n) umfassen, wobei jede nichtlineare Funktion an mehr als einer Modellgleichung (1) beteiligt sein kann, und wobei die nichtlineare(n) Funktion(en), die an der/den Modellgleichung(en) (1) beteiligt sind, als gewichtete Summe(n) von Produkten von Basisfunktionen definiert sind, vorzugsweise von eindimensionalen Basisfunktionen von Eingaben der nichtlinearen Funktionen, wie jeweils durch die Gleichungen (2-4) für ein-, zwei- und dreidimensionale nichtlineare Funktionen ($F^1, F^2, F^3$) definiert ist:

$$F^1(x) = \sum_{i=1\ldots p} b_i g_i^x(x) \, ,$$

$$(2)$$

$$F^2(x, y) = \sum_{i=1\ldots p} \sum_{j=1\ldots q} b_{i,j} g_i^x(x) g_j^y(y) \, ,$$

$$(3)$$

$$F^3(x, y, z) = \sum_{i=1\ldots p} \sum_{j=1\ldots q} \sum_{l=1\ldots r} b_{i,j,k} g_i^x(x) g_j^y(y) g_k^z(z) \, ,$$

$$(4)$$

wobei $b_i$, $b_{ij}$ und $b_{ijk}$ die Koeffizienten sind, die die nichtlineare(n) Funktion(en) definieren, und $p$, $q$ und $r$ die Anzahlen der Basisfunktionen $g_i^x, g_j^y$ und $g_k^z$ sind, die sich jeweils auf die Prozessvariablen $x$, $y$ und $z$ beziehen,

- Auferlegen der Bedingungen auf einige oder alle oder keine der nichtlinearen Funktionen $F$, die an der/den Gleichung(en) (1) beteiligt sind, zum monotonen Erhöhen oder Verringern bezüglich einiger oder aller Eingaben (x, y, z) der nichtlinearen Funktion(en), und die Bedingungen werden in die Beschränkungen umgewandelt, die auf die Koeffizienten $b_i$ $b_{ij}$ und $b_{ijk}$ auferlegt werden,
- Auferlegen der Bedingungen auf einige oder alle oder keine der Zeichen der Koeffizienten der linearen Funktionen, die an der/den Modellgleichung(en) beteiligt sind,
- Sammeln von gemessenen Werten für alle Prozessvariablen und Berechnen der Werte aller Variablen, die davon abgeleitet sind, die an der/den Modellgleichung(en) beteiligt sind, um eine Gruppe von Datenabtastwerten zu erreichen, wobei jeder Datenabtastwert eine Sammlung von Werten aller Prozessvariablen oder/und Variablen, die davon abgeleitet sind, in einem festgelegten Moment ist,
- Identifizieren der Modellgleichung(en), was das Bestimmen der Koeffizienten $a_i$ und $b_i$, $b_{ij}$ und $b_{ijk}$, die an

der/den Gleichung (en) (1) beteiligt sind, gemäß der Definition der nichtlinearen Funktionen (2-4) durch Minimieren der Fehler der Modellgleichung(en) (1) bei jedem Datenabtastwert gemäß Gleichung (5) bedeutet

$$\min\left[\sum_{i=1}^{N} \sum_{k=1}^{M} a_k f(e_{ik}) + \sum_{i=1}^{L} \beta_i C_i\right]$$

$$(5)$$

wobei $N$ die Anzahl an Datenabtastwerten ist, $M$ die Anzahl an Modellgleichungen der allgemeinen Formel (1) ist, $e_{ik}$ der Fehler der Gleichung $k$ ist, der durch Einsetzen der Werte der Prozessvariablen oder/und Variablen, die davon abgeleitet sind, des Datenabtastwerts i in den Teil auf der linken Seite der Gleichung $k$ berechnet wird, $a_k$ der nicht-negative Koeffizient ist, der die relative Gewichtung der Gleichung $k$ definiert, $f$ eine beliebige Verlustfunktion ist, die die Einbuße beschreibt, die durch das Identifikationsverfahren erlitten wurde, $\beta_i$ nicht-negative Parameter sind, die die gewünschte Stärke des Modellglättens definieren, $L$ die Anzahl an verschiedenen nichtlinearen Funktionen ist, die an der/den Modellgleichung(en) beteiligt sind, und $C_i$ die Gesamtkrümmung der Anzahl i der nichtlinearen Funktion ist, wobei die Minimierung (5) unter den Beschränkungen durchgeführt wird, die auf die Modellkoeffizienten $a_i$ und $b_i$, $b_{ij}$ und $b_{ijk}$ auferlegt werden, die die Eintönigkeitsbedingungen für die nichtlinearen Funktionen bezüglich ihrer Eingaben darstellen,
- Einstellen des Betriebs von mindestens einem Teil des Fluss (F) -Netzwerks und/oder der Prozesssteuerung gemäß den identifizierten Gleichungen oder
- Auswählen der Defekterfassungsschwellenwerte für einige oder alle der identifizierten Gleichungen,
- Berechnen der Fehler der identifizierten Modellgleichungen durch Einsetzen der aktuellen Werte der Prozessvariablen oder/und Variablen, die davon abgeleitet sind, in der/den Modellgleichung(en),
- Auswerten der Fehler der identifizierten Modellgleichungen gegenüber den jeweiligen Defekterfassungsschwellenwerten und Erfassen von Defekten in dem Flussnetzwerk oder in einem Teil davon und möglicherweise
- Diagnostizieren des Defektorts.

11. Verfahren nach Anspruch 10, wobei das Einstellen des Betriebs eines Fluss (F) -Netzwerks auf einigen oder allen der Modellgleichungen basiert, welche die üblichen Eigenschaften des Fluss (F) -Netzwerks widergeben, einschließlich der Struktur der Nichtlinearität des Netzwerks oder eines Teils davon und des monotonen Charakters der Abhängigkeiten zwischen den Prozessvariablen, wobei die Modellgleichung(en) zuverlässige Schätzungen unter unerforschten Betriebsbedingungen bereitstellen.

12. Verfahren nach Anspruch 10 oder 11, wobei die Verlustfunktion zum Auswerten des Fehlers in Gleichung (5) aus der Gruppe bestehend aus einer Quadrierungsfunktion, einer Absolutwertfunktion, einer Huber-Funktion, einer Biquadratfunktion und einer L1-L2-Funktion ausgewählt ist.

13. Verfahren nach einem der Ansprüche 10-12, wobei die nichtlinearen Funktionen, die an der/den Modellgleichung(en) (1) beteiligt sind, als gewichtete Summen von Produkten von stückweisen linearen oder stückweisen quadratischen Basisfunktionen $g_i^{x}, g_j^{y}$ und $g_k^{z}$ definiert sind, wobei

- die stückweisen linearen Basisfunktionen gemäß Gleichung (6) definiert sind:

$$g_i^{t}(t) = \begin{cases} (t - t_{i-1})/(t_i - t_{i-1}) \ wenn \ t_{i-1} \leq t < t_i \\ (t_{i+1} - t)/(t_{i+1} - t_i) \ wenn \ t_i \leq t < t_{i+1} \ f\ddot{u}r \ i = 2...p-1 \\ 0, ansonsten \end{cases}$$

$$g_1^{t}(t) = \begin{cases} (t_2 - t)/(t_2 - t_1) \ wenn \ t_1 \leq t < t_2 \\ 0, ansonsten \end{cases}$$

$$g_p^{t}(t) = \begin{cases} (t - t_{p-1})/(t_p - t_{p-1}) \ wenn \ t_{p-1} \leq t < t_p \\ 0, ansonsten \end{cases}$$

$$(6)$$

- die stückweisen-quadratischen Basisfunktionen gemäß Gleichung (7) definiert sind:

$$g_i^t = \begin{cases} (t - t_{i-1})^2 /(t_i - t_{i-1}) \ wenn \ t_{i-1} \le t < t_i \\ t_{i+1} - t_{i-1} - (t_{i+1} - t)^2 /(t_{i+1} - t_i) \ wenn \ t_i \le t < t_{i+1} \ \ f\ddot{u}r \ i = 2,...p \\ t_{i+1} - t_{i-1}, \ wenn \ t_{i+1} \le t \\ 0, \ wenn \ t < t_{i-1} \end{cases}$$

$$g_1^t(t) = \begin{cases} t_2 - t_1 - (t_2 - t)^2 /(t_2 - t_1) \ wenn \ t_i \le t < t_2 \\ t_2 - t_1, \ andererseits \end{cases}$$

$$g_p^t(t) = \begin{cases} (t - t_{p-1})^2 /(t_p - t_{p-1}) \ wenn \ t_{p-1} \le t < t_p \\ 0, \ andererseits \end{cases}$$

$$g_{p+1}(t) = 1,$$

$$(7)$$

wobei t eine der Prozessvariablen $x, y, z$ bezeichnet und $t_i, i = 1,...,p$ das Gitter bezüglich der Prozessvariablen x, y oder z ist.

14. Verfahren nach einem der Ansprüche 10-13, wobei die Koeffizienten $a_i$, $b_i$, $b_{ij}$ und $b_{ijk}$, die an den Modellgleichungen (1)-(4) beteiligt sind, durch Minimieren der Summe des Ausdrucks, der die Fehler von jeder Gleichung bei jedem Datenabtastwert darstellt, und des Glättungsausdrucks, der die skalierte Summe der Gesamtkrümmungen der nichtlinearen Ausdrücke, die an den Modellgleichungen beteiligt sind, darstellt, gemäß der Gleichung (8) und unter den Beschränkungen bezüglich der Modelkoeffizienten, die die Eintönigkeitsbedingungen darstellen, bestimmt werden

$$\min \left[ \sum_{i=1}^{N} \ \sum_{k=1}^{M} a_k f(e_{ik}) + \sum_{i=1}^{L} \beta_i C_i \right]$$

$$(8)$$

wobei $N$ die Anzahl an Datenabtastwerten ist, $M$ die Anzahl an Modelgleichungen der allgemeinen Formel (1) ist, $e_{ik}$ der Fehler der Gleichung $k$ für den Datenabtastwert $i$ ist, $f$ eine beliebige Verlustfunktion ist, die die Einbuße beschreibt, die durch das Identifikationsverfahren der Modellgleichung erlitten wird, $a_k$ ein nicht-negativer Koeffizient ist, der die relative Gewichtung der Gleichung $k$ definiert, $\beta_i$ nicht-negative Parameter sind, die die gewünschte Stärke des Modellglättens definieren, $L$ die Anzahl an verschiedenen nichtlinearen Funktionen ist, die an der/den Modellgleichung(en) beteiligt sind, und $C_i$ die Gesamtkrümmung der Anzahl der nichtlinearen Funktion i ist, die als die Summe von lokalen Krümmungen der nichtlinearen Funktion $i$ definiert ist, die an den inneren Stellen der ein-, zwei- oder dreidimensionalen Gitter berechnet wird, die für ein-, zwei- und dreidimensionale nichtlineare Funktionen gemäß den Gleichungen (9-11) definiert sind:

$$x_i, i = 2,..., p - 1$$

$$(9)$$

$$(x_i, y_j), i = 2,..., p - 1, j = 2,..., q - 1$$

$$(10)$$

$$(x_i, y_j, z_k), i = 2,..., p - 1, j = 2,..., q - 1, k = 2,..., r - 1,$$

$$(11)$$

wobei *p, q* und *r* die Anzahl an Knoten in den Gittern bezüglich der Variablen x, y und z sind, wobei die lokalen Krümmungen als die Summen von geteilten Differenzen zweiter Ordnung im Quadrat gemäß den Gleichungen (12-14) berechnet werden:

$$\Delta b_i = \left(\left(\frac{b_{i+1}-b_i}{x_{i+1}-x_i} - \frac{b_i-b_{i-1}}{x_i-x_{i-1}}\right)/\left(\frac{x_{i+1}-x_{i-1}}{2}\right)\right)^2$$

$$(12)$$

$$\Delta b_{i,j} = \left(\left(\frac{b_{i+1,j}-b_{i,j}}{x_{i+1}-x_i} - \frac{b_{i,j}-b_{i-1,j}}{x_i-x_{i-1}}\right)/\left(\frac{x_{i+1}-x_{i-1}}{2}\right)\right)^2 + \left(\left(\frac{b_{i,j+1}-b_{i,j}}{y_{j+1}-y_j} - \frac{b_{i,j}-b_{i,j-1}}{y_j-y_{j-1}}\right)/\left(\frac{y_{j+1}-y_{j-1}}{2}\right)\right)^2,$$

$$(13)$$

$$\Delta b_{i,j,k} = \left(\left(\frac{b_{i+1,j,k}-b_{i,j,k}}{x_{i+1}-x_i} - \frac{b_{i,j,k}-b_{i-1,j,k}}{x_i-x_{i-1}}\right)/\left(\frac{x_{i+1}-x_{i-1}}{2}\right)\right)^2$$
$$+ \left(\left(\frac{b_{i,j+1,k}-b_{i,j,k}}{y_{j+1}-y_j} - \frac{b_{i,j,k}-b_{i,j-1,k}}{y_j-y_{j-1}}\right)/\left(\frac{y_{j+1}-y_{j-1}}{2}\right)\right)^2 +$$
$$\left(\left(\frac{b_{i,j,k+1}-b_{i,j,k}}{z_{j+1}-z_j} - \frac{b_{i,j,k}-b_{i,j,k-1}}{z_j-z_{j-1}}\right)/\left(\frac{z_{j+1}-z_{j-1}}{2}\right)\right)^2.$$

$$(14)$$

**15.** Verfahren nach einem der vorherigen Ansprüche 8-14 zum Optimieren der Dauerzustandsbetriebsbedingungen des Fluss (F) -Netzwerks, umfassend

- Finden der neuen Betriebsbedingungen auf Grundlage der identifizierten Modellgleichungen (1),
- Führen des Fluss (F) -Netzwerks zu den neuen Betriebsbedingungen durch Einstellen einiger oder aller oder keiner der Eingabeprozessvariablen, welche nicht von der Prozesssteuerung verwendet werden, und der Zielwerte (Sollwerte) von einigen oder allen oder keinen der gesteuerten Prozessvariablen oder Ableitungen davon, wobei die Eingabeprozessvariablen die Variablen sind, welche die Betriebsbedingungen beeinflussen, wie etwa Grade der Öffnung des Ventils (V), die Pumpenlast.

**16.** Verfahren nach Anspruch 15 zum Optimieren des Fluss (F) -Netzwerks, wobei das Verfahren ferner aus dem Schätzen der Verzerrung des/der identifizierten Modellgleichung(en) unter Verwenden der aktuellen Prozessdaten besteht, wobei die Verzerrung der systematische Fehler der Modellgleichungen aufgrund von Prozessstörungen und/oder eines Modellierfehlers unter unerforschten Betriebsbedingungen ist.

**17.** Verfahren nach einem der Ansprüche 8-14 zum adaptiven Steuern des Fluss (F) -Netzwerks umfassend

- Einsetzen der aktuellen Werte der Prozessvariablen oder/und Variablen, die davon abgeleitet sind, in den identifizierten Gleichungen (1) zum Berechnen der Steigerungen der Antworten der manipulierten Variablen der Steuerungen auf die gesteuerten Variablen, wobei eine Steuerung ein Gerät oder ein Computerprogramm, welches seine gesteuerte(n) Variable(n) überwacht und die Betriebsbedingungen des Flussnetzwerks durch Einstellen der Werte der manipulierten Variable(n) der Steuerung beeinflusst, ist,
- Einstellen der Parameter aller oder einiger oder keiner der Steuerungen, welche nicht auf einem Prozessmodell beruhen, einschließlich der Vorwärtskopplungssteuerungen, der proportionalen Steuerungen, der proportionalen-integralen Steuerungen, der proportionalen-integralenabgeleiteten Steuerungen, wobei die Parameter der Steuerungen gemäß den aktuellen Werten der Steigerungen der Antworten der manipulierten Variablen auf die gesteuerten Variablen aktualisiert werden,

- Einstellen aller oder einiger oder keiner der modellbasierten Steuerungen, einschließlich das Modell vorhersagenden Steuerungen, durch Skalieren der Modelle, die von den Steuerungen verwendet werden, gemäß den Steigerungen der Antworten der manipulierten Variablen der Steuerungen auf ihre gesteuerten Variablen.

**18.** Verfahren nach einem der vorherigen Ansprüche, wobei das Fluss (F) -Netzwerk das Dampf-Wasser-Netzwerk des Trocknungsabschnitts eines Papiers oder einer Kartonmaschine, die Steuerventile (V) enthält, ist.

**19.** Computerlesbares Mittel, das ein computerlesbares Speichermedium enthält, das Anweisungen umfasst, um ein Datenverarbeitungssystem dazu zu bringen, ein Verfahren auszuführen, **dadurch gekennzeichnet, dass** das Verfahren nach einem der vorherigen Ansprüche zum Erfassen von Defekten oder Steuern und/oder Optimieren eines Flussnetzwerkes, das durch Ventile (V) gesteuert wird, oder eines Fluss (F) -Netzwerks mit (einer) chemischen Reaktion(en) oder eines Teil davon, verwendet wird.

**Revendications**

**1.** Procédé de détection de défaillances dans un réseau à débit (F) commandé par des soupapes (V) ou dans une partie de celui-ci, dans lequel ledit réseau à débit (F) est non linéaire en ce qui concerne au moins une variable de processus, ledit procédé comprend au moins une des étapes suivantes :

- pour identifier la structure dudit réseau à débit (F), au moins une équation de modèle est utilisée qui contient au moins une fonction sélectionnée dans le groupe comprenant une (des) fonctions linéaires du (des) variables de processus et/ou variable(s) déduite de cette dernière et une (des) fonctions non linéaires, dans lequel certain ou tous ou aucun des coefficients de ladite(desdites) fonctions linéaires peuvent être fixes, dans lequel chaque fonction non linéaire peut être impliquée dans plus d'une équation de modèle,

- imposer les conditions sur certaines ou toutes ou aucune des fonctions non linéaires impliquées dans ladite (lesdites) équations de modèle afin d'augmenter ou diminuer de manière constante par rapport à certaine(s) ou toute(s) les entrées de ladite (desdites) fonctions non linéaires, et lesdites conditions sont converties aux contraintes imposées sur lesdits coefficients définissant ladite (lesdites) fonctions non linéaires,

- imposer les conditions sur certains ou tous ou aucun des signes sur les coefficients de la (des) fonctions linéaires impliquées dans l' (les) équations de modèle,

- collecter des valeurs mesurées pour toute (s) les variable(s) de processus et calculer informatiquement les valeurs de toute(s) les variables déduites de celles-ci, impliquées dans l' (les) équations de modèle pour obtenir un ensemble d'échantillons de données, dans lequel chaque échantillon de données est une collection de valeurs de toute(s) lesdites variable(s) de processus et/ou variable(s) déduites de celles-ci à un moment fixe ;

**caractérisé en ce que**
jusqu'à trois variables de processus et/ou variables déduites de celles-ci sont impliquées, qui sont des entrées de ladite (lesdites) fonctions non linéaires, à condition qu'au moins une de ladite (desdites) équations de modèle contiennent au moins une dite fonction non linéaire,
chaque fonction non linéaire est définie comme une somme pondérée des produits de fonctions de base de son (ses) entrées, dans lequel lesdites pondérations de produits sont les coefficients définissant la (les) fonctions non linéaires et dans lequel un ensemble de fonctions de base est sélectionné pour chaque entrée de ladite (desdites) fonctions non linéaires avant l'identification de la (des) équations de modèle, et
dans lequel le procédé comprend en outre les étapes consistant à :

- identifier l' (les) équations de modèle, ce qui signifie définir les coefficient de ladite (desdites) fonctions linéaires et les coefficients définissant la (les) fonctions non linéaires, en minimisant les erreurs de la (des) équations de modèle à chaque échantillon de données tout en prenant en compte l'aplatissement de ladite (dedites) équations de modèle, moyennant quoi les erreurs à minimiser dans ladite (lesdites) équations de modèle sont définies en substituant les valeurs de la (des) variables de processus et/ou variable(s) déduites de celles-ci à l' (aux) équations, dans lequel l'aplatissement de l' (des) équations de modèle est obtenue en minimisant la somme des courbures totales de ladite (desdites) fonctions non linéaires prises avec des pondérations non négatives, dans lequel ladite minimisation des erreurs de l' (des) équations de modèle conjointement à ladite somme de courbures totales est effectuée sous les contraintes imposées à la fois aux coefficients définissant ladite (lesdites) fonctions non linéaires qui représentent les conditions de constance pour ladite (lesdites) fonctions non linéaires par rapport à leur (leurs) entrées et sur les signes des coefficients de la (les) fonctions linéaires impliquées dans ladite (lesdites) équations de modèle,
- sélectionner les seuils de détection de défaillance pour au moins une équation de modèle identifiée,
- calculer informatiquement les erreurs de ladite (lesdites) équations de modèles identifiées en substituant les valeurs actuelles des variables de processus ou variables déduites de celles-ci à ladite (auxdites) équations,
- évaluer lesdites erreurs de la (des) équations de modèle identifiées par rapport aux seuils de détection de défaillance effectifs et détecter des défaillances de réseau à débit ou une partie de celui-ci.

2. Procédé selon la revendication 1 de détection de défaillances, diagnostiquant l'emplacement de la défaillance et/ou corrigeant les effets des défaillances du réseau à débit (F) avec une (des) réactions chimiques ou une partie de celui-ci, ledit réseau à débit (F) avec la (les) réactions chimiques est non linéaire en ce qui concerne au moins une variable de processus, dans lequel les équations de modèle se rapportent aux équilibres de masses, aux équilibres énergétiques et aux taux de réactions chimiques, dans lequel certains ou tous au aucun des coefficients desdites fonctions linéaires peut être fixe selon les équilibres des masses, les équilibres énergétiques ou d'autres phénomènes physiques ou chimiques dans ledit réseau à débit (F) avec une (des) réactions chimiques, dans lequel

- l' (les) équations de modèle relatives aux équilibres des masses sont composées de fonctions linéaires qui en particulier représentent les mesures de débit (F), les variables reflétant le taux de variation de la masse de substance dans les réservoirs (T) impliqués dans ledit réseau à débit (F) avec une(des) réactions chimiques, et les fonctions non linéaires qui en particulier représentent des débits (F) à travers des dispositifs de processus, comme des soupapes (V) et pompes et/ou des combinaisons de celles-ci,
- l' (les) équations de modèle relatives aux équilibres des masses sont composées de fonctions linéaires qui représentent en particulier le (les) flux d'énergie, les variables reflétant le taux de variation de la masse de substance dans les réservoirs (T) impliqués dans ledit réseau à flux avec une (des) réactions chimiques, et les fonctions non linéaires qui en particulier représentent l'énergie libérée/consommée par les réactions chimiques et les phénomènes d'échange thermique dans ledit réseau à débit (F) avec la (les) réactions chimiques,
- l' (les) équations de modèle relatives à la vitesse des réactions chimiques sont composées de fonctions linéaires qui représentant les concentrations et/ou flux (F) de composés chimiques et de fonctions non linéaires, représentant divers réactions chimiques, dans lequel les entrées d'une fonction non linéaire sont sélectionnées parmi les propriétés des flux d'entrée dans le réacteur, la pression (p) et la température dans ledit réacteur et le temps de séjour de la substance dans le réacteur et/ou des variables déduites de ceux-ci.

3. Procédé selon les revendications 1 ou 2 de détection de défaillances dans un réseau à débit (F) commandé par des soupapes (V), qui peut aussi inclure d'autres dispositifs comme des tuyaux, pompes, réservoirs (T) et des réacteurs chimiques, dans lequel le procédé comprend au moins les étapes suivantes :

- pour identifier la structure dudit réseau à débit (F), au moins une équation de modèle est utilisée représentant l' (les) équilibres de masses de différente(s) partie(s) dudit réseau à débit (F) qui contient au moins une fonction sélectionnée dans le groupe comprenant une (des) fonctions linéaires de la (des) variables de processus et/ou variable (s) déduites de celles-ci et une (des) fonctions non linéaires, impliquant jusqu'à trois variable de processus et/ou variables déduites de celles-ci, qui sont des entrées de ladite (desdites) fonctions non linéaires, à condition qu'au moins de l' (des) équations de modèle contienne au moins une dite fonction non linéaire,

dans lequel les fonctions linéaires impliquées dans lesdites équations de modèle représentent les mesures de débit (F) et/ou des dérivées des niveaux de réservoir (T) et/ou variables reflétant la proportion de la substance chimique dans les réservoirs (T) et tuyaux impliqués dans ledit réseau à débit (F), dans lequel certains ou tous ou aucun des coefficients de ladite (desdites) fonctions linéaires peut être fixe afin de représenter adéquatement les équilibres de masses,

- imposer les conditions sur certains ou tous ou aucun des signes des coefficients de la (des) fonctions linéaires impliquées dans ladite (lesdites) équations de modèle pour représenter adéquatement les équilibres de masses,

dans lequel au moins une desdites fonctions non linéaires impliquée dans ladite (lesdites) équations de modèle correspond au fonctionnement des soupapes (V) dans ledit réseau à débit (F), dans lequel lesdites entrées de fonction non linéaire sont le degré d'ouverture de la soupape respective et la pression mesurée avant ou après la soupape respective ou des variables déduites de celles-ci, dans lequel la valeur d'une fonction non linéaire impliquée dans les équations de modèle représente le débit à travers la soupape (V) concernée, dans lequel chaque fonction non linéaire peut être impliquée dans plus d'une équation de modèle et dans lequel chaque fonction non linéaire est définie comme une somme pondérée des produits de fonctions de base de son (ses) entrées, dans lequel ladite pondération des produits sont les coefficients définissant la (les) fonctions non linéaires et dans lequel un ensemble de fonctions de base est sélectionné pour chaque entrée de ladite (desdites) fonctions non linéaires avant l'identification de la (des) équations de modèle,

- imposer les conditions sur certaines ou toutes ou aucune des fonctions non linéaires impliquées dans ladite (lesdites) équations de modèle afin d'augmenter ou diminuer de manière constante par rapport à certaines ou toutes des entrées de ladite (lesdites) fonctions non linéaires, et lesdites conditions sont converties aux contraintes imposées sur lesdits coefficients définissant ladite (lesdites) fonctions non linéaires, dans lequel lesdites conditions sont imposées sur les fonctions non linéaires selon les propriétés des soupapes et/ou équipements, en particulier le débit (F) à travers une soupape (V) augmente par rapport au degré d'ouverture de soupape et à la pression avant la soupape, et le débit diminue par rapport à la pression (P) après la soupape,
- collecter des valeurs mesurées pour toute(s) les variables de processus et calculer informatiquement les valeurs de toute(s) les variables déduites de celles-ci, impliquées dans l' (les) équations de modèle pour obtenir un ensemble d'échantillons de données, dans lequel chaque échantillon de données est une collecte de valeurs de toutes lesdites variable(s) de processus et/ou variable(s) déduites de celles-ci à un moment fixe,
- identifier l' (les) équations de modèle ce qui signifie de définir les coefficients de ladite (lesdites) fonctions linéaires et les coefficients définissant la (les) fonctions non linéaires, en minimisant les erreurs de l' (des) équations de modèle à chaque échantillon de données tout en prenant en compte l'aplatissement de ladite (desdites) équations de modèle, moyennant quoi les erreurs à minimiser dans ladite (lesdites) équations de modèle sont définies en substituant les valeurs de la (des) variables de processus et/ou la (les) variable(s) déduites de celles-ci à l' (les) équation(s), dans lequel l'aplatissement de l' (des) équations de modèle est obtenu en minimisant la somme des courbures totales de ladite (desdites) fonctions non linéaires prises avec des pondérations non négatives, dans lequel ladite minimisation des erreurs de la (des) équations de modèle conjointement à ladite somme de courbures totales est effectuée sous lesdites contraintes imposées à la fois sur les coefficients définissant ladite (lesdites) fonctions non linéaires qui représentent les conditions de constante pour ladite (lesdites) fonctions non linéaires par rapport à leur (leurs) entrées et sur les signes des coefficients de la (des) fonctions linéaires impliquées dans ladite (lesdites) équations de modèle,
- sélectionner les seuils de détection de défaillance pour au moins une équation de modèle identifiée,
- calculer informatiquement les erreurs de ladite (desdites) équations de modèle identifiées en substituant les valeurs actuelles des variables de processus ou variables déduites de celles-ci à ladite (auxdites) équations,
- évaluer lesdites erreurs de la (des) équations de modèle identifiées par rapport aux seuils de détection de défaillance respectifs et détecter des défaillances dans le réseau à débit (F) ou dans une partie de celui-ci, dans lequel les signes des erreurs des équations de modèle peuvent être utilisés pour distinguer des fuites et des blocages de soupapes (V) ou tuyaux.

4.  Procédé selon la revendication 1, 2 ou 3, dans lequel pour identifier la structure dudit réseau à débit (F) commandé par des soupapes (V), d'autres équations que les équations de modèle définies à la revendication 1, 2 ou 3 sont utilisées.

5.  Procédé selon la revendication 1, 2, 3 ou 4 comprenant en outre l'étape de diagnostic de l'emplacement de la défaillance, lorsqu'une défaillance dans le réseau à débit (F) commandé par des soupapes (V) ou une partie de celui-ci est détectée, en

- développant une matrice d'incidence de défaillance résiduelle binaire sur la base de la (des) équations de modèle et la connaissance des effets des défaillances dans les parties ou dispositifs du réseau à débit (F),
- obtenant la modèle binaire actuel, contenant les résultats de l'évaluation des erreurs de la (des) équation de modèle par rapport aux seuils de détection de défaillance respectifs,
- identifiant l'emplacement de la défaillance sur la base de la comparaison dudit modèle actuel avec les modèles par défaut contenus dans ladite matrice d'incidence de défaillance résiduelle.

6.  Procédé selon la revendication 5, comprenant en outre une étape de correction des effets des défaillances dans un réseau à débit (F) commandé par de soupapes (V) ou dans une partie de celui-ci, lorsque l'emplacement du diagnostic actuel est diagnostique dans le réseau à débit (F).

7.  Procédé selon la revendication 6, comprenant de sélectionner et appliquer une action corrective dans la réseau à débit (F) commandé par des soupapes (V), incluant l'interruption de processus, le fonctionnement fiable du réseau à débit (F) ou une partie de celui-ci à de nouvelles conditions opérationnelles, la reconfiguration du réseau à débit (F) ou d'une partie de celui-ci en utilisant des capteurs, actionneurs ou composants redondants de manière à garder inchangées les conditions opérationnelles et la maintenance du réseau à débit (F) en remplaçant les pièces défectueuses du réseau à débit (F) ou des dispositifs de celui-ci.

8. Procédé de commande et d'optimisation d'un réseau à débit (F) commandé par des soupapes (V) ou une partie de celui-ci, dans lequel ledit réseau à débit (F) est non linéaire en ce qui concerne au moins une variable de processus, dans lequel le procédé comprend au moins les étapes suivantes :

   - pour identifier la structure dudit réseau à débit (F), au moins une équation de modèle est utilisée qui contient au moins une fonction sélectionnée dans le groupe comprenant une (des) fonctions linéaires du (des) variables de processus et/ou variable(s) déduite de cette dernière et une (des) fonctions non linéaires, dans lequel certain ou tous ou aucun des coefficients de ladite (desdites) fonctions linéaires peuvent être fixes, dans lequel chaque fonction non linéaire peut être impliquée dans plus d'une équation de modèle,
   - imposer les conditions sur certaines ou toutes ou aucune des fonctions non linéaires impliquées dans ladite (lesdites) équations de modèle afin d'augmenter ou diminuer de manière constante par rapport à certaine(s) ou toute(s) les entrées de ladite (desdites) fonctions non linéaires, et lesdites conditions sont converties aux contraintes imposées sur lesdits coefficients définissant ladite (lesdites) fonctions non linéaires,
   - imposer les conditions sur certains ou tous ou aucun des signes sur les coefficients de la (des) fonctions linéaires impliquées dans l' (les) équations de modèle,
   - collecter des valeurs mesurées pour toute(s) les variable(s) de processus et calculer informatiquement les valeurs de toute(s) les variables déduites de celles-ci, impliquées dans l' (les) équations de modèle pour obtenir un ensemble d'échantillons de données, dans lequel chaque échantillon de données est une collecte de valeurs de toute(s) lesdites variable(s) de processus et/ou variable(s) déduites de celles-ci à un moment fixe ;

   **caractérisé en ce que**
   jusqu'à trois variables de processus et/ou variables déduites de celles-ci sont impliquées, qui sont des entrées de ladite (lesdites) fonctions non linéaires, à condition qu'au moins une de ladite (desdites) équations de modèle contiennent au moins une dite fonction non linéaire,
   chaque fonction non linéaire est définie comme une somme pondérée des produits de fonctions de base de son (ses) entrées, dans lequel lesdites pondérations de produits sont les coefficients définissant la (les) fonctions non linéaires et dans lequel un ensemble de fonctions de base est sélectionné pour chaque entrée de ladite (desdites) fonctions non linéaires avant l'identification de la(des) équations de modèle, et
   dans lequel le procédé comprend en outre les étapes consistant à :

   - identifier la (les) équations de modèle ce qui signifie de définir les coefficient de ladite (desdites) fonctions linéaires et les coefficients définissant la (les) fonctions linéaires, en minimisant les erreurs de la (des) équations de modèle à chaque échantillon de données tout en prenant en compte l'aplatissement de ladite (desdites) équations de modèle, moyennant quoi les erreurs à minimiser dans ladite (lesdites) équations de modèle sont définies en substituant les valeurs de la (des) variables de processus et/ou variable(s) déduites de celles-ci aux équation(s), dans lequel l'aplatissement de la (des) équations de modèle est réalisé en minimisant la somme des courbures totales de ladite(desdites) fonctions non linéaires prises avec des pondérations non négatives, dans lequel ladite minimisation des erreurs de la (des) équations de modèle conjointement à ladite somme des courbures totales est effectuée sous lesdites contraintes imposées à la fois sur les coefficients définissant ladite(lesdites) fonctions non linéaires qui représentent les conditions de constance pour ladite (lesdites) fonctions non linéaires par rapport à leur (leurs) entrées et sur les signes des coefficients de la (les) fonctions linéaires impliquées dans ladite (lesdites) équations de modèle et
   - ajuster le fonctionnement d'au moins une partie du réseau à débit (F) et/ou de la commande de processus, selon lesdites équations de modèle identifiées.

9. Procédé selon la revendication 8 pour commander et/ou optimiser un réseau à débit (F) commandé par des soupapes (V), qui peut aussi inclure d'autres dispositifs tels que des tuyaux, pompes, réservoirs (T) et réacteurs chimiques, dans lequel le procédé comprend au moins une des étapes suivantes :

   - pour identifier la structure dudit réseau à débit (F), au moins une équation de modèle est utilisée représentant l' (les) équilibres de masses de différentes(s) partie(s) dudit réseau à débit (F) qui contient au moins une fonction sélectionnée dans le groupe comprenant une (des) fonctions linéaires de la (des) variables de processus et/ou variable(s) déduite(s) de celles-ci et une (des) fonctions non linéaires, impliquant jusqu'à trois variable de processus et/ou variables déduites de celles-ci, qui sont des entrées de ladite (desdites) fonctions non linéaires, à condition qu'au moins de l' (des) équations de modèle contienne au moins une dite fonction non linéaire,

dans lequel les fonctions linéaires impliquées dans lesdites équations de modèle représentent les mesures de débit (F) et/ou des dérivées des niveaux de réservoir (T) et/ou variables reflétant la proportion de la substance chimique dans les réservoirs (T) et tuyaux impliqués dans ledit réseau à débit (F), dans lequel certains ou tous ou aucun des coefficients de ladite(desdites) fonctions linéaires peut être fixe afin de représenter adéquatement les équilibres de masses,

- imposer les conditions sur certains ou tous ou aucun des signes des coefficients de la (des) fonctions linéaires impliquées dans ladite (lesdites) équations de modèle pour représenter adéquatement les équilibres de masses,

dans lequel au moins une desdites fonctions non linéaires impliquée dans ladite (lesdites) équations de modèle correspond au fonctionnement des soupapes (V) dans ledit réseau à débit (F), dans lequel lesdites entrées de fonction non linéaire sont le degré d'ouverture de la soupape (V) respective et la pression (p) mesurée avant ou après la soupape respective ou des variables déduites de celles-ci, dans lequel la valeur d'une fonction non linéaire impliquée dans les équations de modèle représente le débit à travers la soupape (V) concernée, dans lequel chaque fonction non linéaire peut être impliquée dans plus d'une équation de modèle et dans lequel chaque fonction non linéaire est définie comme une somme pondérée des produits de fonctions de base de son (ses) entrées, dans lequel ladite pondération des produits sont les coefficients définissant la (les) fonctions non linéaires et dans lequel un ensemble de fonctions de base est sélectionné pour chaque entrée de ladite (desdites) fonctions non linéaires avant l'identification de la (des) équations de modèle,

- imposer les conditions sur certaines ou toutes ou aucune des fonctions non linéaires impliquées dans ladite (lesdites) équations de modèle afin d'augmenter ou diminuer de manière constante par rapport à certaines ou toutes des entrées de ladite (lesdites) fonctions non linéaires, et lesdites conditions sont converties aux contraintes imposées sur lesdits coefficients définissant ladite (lesdites) fonctions non linéaires, dans lequel lesdites conditions sont imposées sur les fonctions non linéaires selon les propriétés des soupapes (V) et/ou équipements, en particulier le débit à travers une soupape (V) augmente par rapport au degré d'ouverture de soupape (V) et à la pression (P) avant la soupape (V), et le débit (F) diminue par rapport à la pression après la soupape (V),
- collecter des valeurs mesurées pour toute(s) les variables de processus et calculer informatiquement les valeurs de toute(s) les variables déduites de celles-ci, impliquées dans l' (les) équations de modèle pour obtenir un ensemble d'échantillons de données, dans lequel chaque échantillon de données est une collecte de valeurs de toutes lesdites variable(s) de processus et/ou variable(s) déduites de celles-ci à un moment fixe,
- identifier l' (les) équations de modèle ce qui signifie de définir les coefficients de ladite (lesdites) fonctions linéaires et les coefficients définissant la (les) fonctions non linéaires, en minimisant les erreurs de l' (des) équations de modèle à chaque échantillon de données tout en prenant en compte l'aplatissement de ladite (desdites) équations de modèle, moyennant quoi les erreurs à minimiser dans ladite (lesdites) équations de modèle sont définies en substituant les valeurs de la (des) variables de processus et/ou la (les) variable(s) déduites de celles-ci à l' (les) équation(s), dans lequel l'aplatissement de l' (des) équations de modèle est obtenu en minimisant la somme des courbures totales de ladite (desdites) fonctions non linéaires prises avec des pondérations non négatives, dans lequel ladite minimisation des erreurs de la (des) équations de modèle conjointement à ladite somme de courbures totales est effectuée sous lesdites contraintes imposées à la fois sur les coefficients définissant ladite (lesdites) fonctions non linéaires qui représentent les conditions de constante pour ladite(lesdites) fonctions non linéaires par rapport à leur (leurs) entrées et sur les signes des coefficients de la (des) fonctions linéaires impliquées dans ladite (lesdites) équations de modèle et
- ajuster le fonctionnement d'au moins une partie du réseau à débit (F) et/ou la commande de processus, selon lesdites équations de modèle identifiées.

**10.** Procédé selon une quelconque des revendications précédentes, dans lequel l'équation de modèle ou un ensemble d'équations de modèle est/sont de la formule générale (1) :

$$\sum_{i=1}^{k} a_i x_i + \sum_{i=1}^{l} F_i^1(x_i^1) + \sum_{i=1}^{m} F_i^2(x_i^2, y_i^2) + \sum_{i=1}^{n} F_i^3(x_i^3, y_i^3, z_i^3) = 0$$

$$(1)$$

où k est le nombre de variables de processus et/ou variables déduites de celles-ci impliquées dans l'équation générale (1) linéairement avec des coefficients $a_i$, dans lequel certains ou tous ou aucun desdits coefficients ai peuvent être fixes, chaque variable (x, y, z) signifie indépendamment l'une de l'autre une variable de processus ou une variable déduite de celle-ci, lesquelles variables (x, y, z) sont des entrées de fonctions non linéaires F, les variables 1, m et n sont les nombres des fonctions non linéaires F impliquant une, deux ou trois entrée(s) respectivement, dans lequel chaque fonction non linéaire peut être impliquée dans plus d'une équation de modèle (1) et dans lequel la (les) fonctions non linéaires impliquées dans l' (les) équations de modèle (1) sont définies comme une (des) sommes pondérées des produits de fonctions de base, de préférence des fonctions de base en une dimension d'entrées desdites fonctions non linéaires, tel que défini par les équations (2-4) pour une, deux ou trois fonctions non linéaires en trois dimensions ($F^1$, $F^2$, $F^3$), respectivement :

$$F^1(x) = \sum_{i=1\ldots p} b_i g_i^x(x) \, ,$$

$$(2)$$

$$F^2(x,y) = \sum_{i=1\ldots p} \sum_{j=1\ldots q} b_{i,j} g_i^x(x) g_j^y(y) \, ,$$

$$(3)$$

$$F^3(x,y,z) = \sum_{i=1\ldots p} \sum_{j=1\ldots q} \sum_{l=1\ldots r} b_{i,j,k} \, g_i^x(x) g_j^y(y) \, g_k^z(z) \, ,$$

$$(4)$$

où $b_i$, $b_{ij}$ et $b_{ijk}$ sont les coefficients définissant la(les) fonctions non linéaires, et p, q et r sont le nombre desdites fonctions de base $g_i^x$, $g_j^y$ et $g_k^z$ relatives aux variables de processus x, y et z respectivement,

- imposer les conditions sur certaines ou toutes ou aucune des fonctions non linéaires F impliquées dans l' (les) équation(s) (1) afin d'augmenter ou diminuer de manière constante par rapport à certaines ou toutes les entrées (x, y, z) de ladite (desdites) fonctions non linéaires et lesdites conditions sont converties aux contraintes imposées sur les coefficients $b_i$, $b_{ij}$ et $b_{ijk}$,
- imposer les conditions sur certains ou tous ou aucun des signes des coefficients des fonctions linéaires impliquées dans ladite (lesdites) équations de modèle,
- collecter des valeurs mesurées pour toute(s) la (les) variables de processus et calculer informatiquement les valeurs de toute(s) les variables déduites de celles-ci, impliquées dans l' (les) équations de modèle pour obtenir un ensemble d'échantillons de données, dans lequel chaque échantillon de données est une collection de valeur de toutes lesdites variable(s) de processus et/ou variable(s) déduites de celles-ci à un moment fixe,
- identifier l' (les) équation(s) de modèle ce qui signifie de déterminer les coefficients $a_i$ et $b_i$, $bi_j$ et $b_{ijk}$ impliqués dans l' (les) équations (1) selon la définition des fonctions non linéaires (2-4) en minimisant les erreurs de l' (des) équations de modèle (1) à chaque échantillon de données, selon l'équation (5)

$$\min\left[\sum_{i=1}^{N} \sum_{k=1}^{M} \alpha_k f(e_{ik}) + \sum_{i=1}^{L} \beta_i C_i\right]$$

$$(5)$$

dans laquelle N est le nombre d'échantillons de données, M est le nombre d'équations de modèle de la formule générale (1), $e_{ik}$ est l' erreur de l' équation k calculé informatiquement en substituant les valeurs des variables de processus ou/et variables déduites de celles-ci de l'échantillon de données i sur le côté gauche de l'équation

k, $a_k$ est un coefficient non négatif définissant la pondération relative de l'équation k, f est n'importe quelle fonction de perte décrivant la pénalité encourue par le procédure d'identification, $\beta_i$ sont des paramètres non négatifs définissant l'intensité désirée d'aplatissement de modèle, L est le nombre de fonctions non linéaires différentes impliquées dans l' (les) équations de modèle et Ci est la courbure totale de la fonction non linéaire numéro i, dans laquelle la minimisation (5) est effectuée sous lesdites contraintes imposées sur les coefficients de modèle $a_i$ et $b_i$, $b_{ij}$ et $b_{ijk}$ représentent les conditions de constance pour les fonctions non linéaires par rapport à leurs entrées,

- ajuster le fonctionnement d'au moins une partie du réseau à débit (F) et/ou la commande de processus, selon lesdites équations identifiées ou
- sélectionner les seuils de détection de défaillance pour certaines ou toutes desdites équation(s) identifiées,
- calculer informatiquement les erreurs desdites équations de modèle identifiées en substituant les valeurs actuelle des variables de processus et/ou variables déduits de celles-ci à ladite (lesdites) équations de modèle,
- évaluer lesdites erreurs des équations de modèle identifiés par rapport aux seuils de détection de défaillance respectifs, et détecter des défaillances dans le réseau à débit ou dans une partie de ce dernier et éventuellement
- diagnostiquer l'emplacement de la défaillance.

11. Procédé selon la revendication 10, dans lequel l'ajustement du fonctionnement d'un réseau à débit (F) est basé sur certaines ou toutes des équations de modèle qui reflètent les propriétés communes dudit réseau à débit (F), incluant la structure de la non linéarité du réseau ou d'une partie de celui-ci et le caractère constant des dépendances entre les variables de processus dans lequel ladite (lesdites) équations de modèle fournissent des estimations fiables dans des conditions opérationnelles inexplorées.

12. Procédé selon la revendication 10 ou 11, dans lequel la fonction de perte pour évaluer une erreur dans une équation (5) est sélectionnée dans le groupe constitué de la fonction de quadrature, fonction de valeur absolue, fonction de Huber, fonction bicarrée et fonction L1-L2.

13. Procédé selon une quelconque des revendications 10 - 12, dans lequel les fonctions non linéaires impliquées dans l' (les) équations de modèle (1) sont définies comme des sommes pondérées des produits de fonctions de base linéaire par morceaux ou quadratique par morceaux $g_i^x$ , $g_j^y$ et $g_k^z$ , dans lequel

- les fonctions de base linéaires par morceaux sont définies selon l'équation (6) :

$$g_i^t(t) = \begin{cases} (t - t_{i-1})/(t_i - t_{i-1}) \; if \; t_{i-1} \le t < t_i \\ (t_{i+1} - t)/(t_{i+1} - t_i) \; if \; t_i \le t < t_{i+1}, \; for \; i = 2 \ldots p\text{-}1 \\ 0, otherwise \end{cases}$$

$$g_1^t(t) = \begin{cases} (t_2 - t)/(t_2 - t_1) \; if \; t_1 \le t < t_2 \\ 0, otherwise \end{cases}$$

$$g_p^t(t) = \begin{cases} (t - t_{p-1})/(t_p - t_{p-1}) \; if \; t_{p-1} \le t < t_p \\ 0, otherwise \end{cases}$$

(6)

- les fonctions de base quadratiques par morceaux sont définies selon l'équation (7) :

$$g_i^t = \begin{cases} (t - t_{i-1})^2/(t_i - t_{i-1}), if \ t_{i-1} \le t < t_i \\ t_{i+1} - t_{i-1} - (t_{i+1} - t)^2/(t_{i+1} - t_i), if \ t_i \le t < t_{i+1} \\ t_{i+1} - t_{i-1}, if \ t_{i+1} \le t \\ 0, if \ t < t_{i-1} \end{cases} \quad \text{for i = 2, ..., p}$$

$$g_1^t(t) = \begin{cases} t_2 - t_1 - (t_2 - t)^2/(t_2 - t_1) \ if \ t_1 \le t < t_2 \\ t_2 - t_1, otherwise \end{cases}$$

$$g_p^t(t) = \begin{cases} \left(t - t_{p-1}\right)^2/(t_p - t_{p-1}) \ if \ t_{p-1} \le t < t_p \\ 0, otherwise \end{cases}$$

$$g_{p+1}(t) = 1,$$

$$(7)$$

dans lequel t dénote une des variables de processus x, y et z et $t_i$, i = 1,...,p est la grille relative à cette variable de processus x, y ou z.

**14.** Procédé selon une quelconque des revendications 10 - 13, dans lequel les coefficients $a_i$, $b_i$, $b_{ij}$ et $b_{ijk}$ impliquées dans les équations de modèle (1)-(4) sont déterminées en minimisant la somme du terme, représentant les erreurs de chaque équation à chaque échantillon de données, et le terme d'aplatissement représentant la somme mise à l'échelle des courbures totales des termes non linéaires impliqués dans les équations de modèle, selon l'équation (8) et sous lesdites contraintes sur les coefficients de modèle représentant les conditions de constance,

$$\min\left[\sum_{i=1}^{N} \sum_{k=1}^{M} \alpha_k f(e_{ik}) + \sum_{i=1}^{L} \beta_i C_i\right]$$

dans lequel N est le nombre d'échantillons de données, M est le nombre d'équations de modèle de la forme générale (1), $e_{ik}$ est l'erreur de l'équation k pour l'échantillon de données i, f est n'importe quelle fonction de perte décrivant la pénalité encourue par le procédure d'identification de l'équation de modèle, $a_k$ est un coefficient non négatif définissant la pondération relative de l'équation k, $\beta_i$ sont des paramètres non négatifs définissant l'intensité désirée d'aplatissement de modèle, L est le nombre de fonctions non linéaires différentes impliquées dans l'(les) équations de modèle et $C_i$ est la courbure totale de la fonction non linéaire numéro i définie comme la somme de courbures totales de la fonction non linéaire i calculée informatiquement aux points intérieurs de grilles à une, deux ou trois dimensions pour des fonctions non linéaires à une, deux ou trois dimensions selon les équation (9-11) :

$$x_i, i = 2, ..., p - 1$$

$$(9)$$

$$(x_i, y_j), i = 2, ..., p - 1, j = 2, ..., q - 1$$

$$(10)$$

$$(x_i, y_j, z_k), i = 2, \ldots, p - 1, j = 2, \ldots, q - 1, k = 2, \ldots, r\text{-}1,$$

$$(11)$$

où p, q et r sont le nombre de noeuds dans les grilles relatives aux variables x,y et z, dans lequel lesdites courbures locales sont calculées informatiquement comme les sommes des différences divisées de second ordre carré selon les équations (12-14) :

$$\Delta b_i = \left( \left( \frac{b_{i+1} - b_i}{x_{i+1} - x_i} - \frac{b_i - b_{i-1}}{x_i - x_{i-1}} \right) / \left( \frac{x_{i+1} - x_{i-1}}{2} \right) \right)^2$$

$$(12)$$

$$\Delta b_{i,j} = \left( \left( \frac{b_{i+1,j} - b_{i,j}}{x_{i+1} - x_i} - \frac{b_{i,j} - b_{i-1,j}}{x_i - x_{i-1}} \right) / \left( \frac{x_{i+1} - x_{i-1}}{2} \right) \right)^2 + \left( \left( \frac{b_{i,j+1} - b_{i,j}}{y_{j+1} - y_j} - \frac{b_{i,j} - b_{i,j-1}}{y_j - y_{j-1}} \right) / \left( \frac{y_{j+1} - y_{j-1}}{2} \right) \right)^2,$$

$$(13)$$

$$\Delta b_{i,j,k} = \left( \left( \frac{b_{i+1,j,k} - b_{i,j,k}}{x_{i+1} - x_i} - \frac{b_{i,j,k} - b_{i-1,j,k}}{x_i - x_{i-1}} \right) / \left( \frac{x_{i+1} - x_{i-1}}{2} \right) \right)^2 + \left( \left( \frac{b_{i,j+1,k} - b_{i,j,k}}{y_{j+1} - y_j} - \frac{b_{i,j,k} - b_{i,j-1,k}}{y_j - y_{j-1}} \right) / \left( \frac{y_{j+1} - y_{j-1}}{2} \right) \right)^2 + \left( \left( \frac{b_{i,j,k+1} - b_{i,j,k}}{z_{j+1} - z_j} - \frac{b_{i,j,k} - b_{i,j,k-1}}{z_j - z_{j-1}} \right) / \left( \frac{z_{j+1} - z_{j-1}}{2} \right) \right)^2.$$

$$(14)$$

15. Procédé selon une quelconque des revendications précédentes 8 - 14 pour l'optimisation des conditions opérationnelles d'état stationnaire du réseau à débit (F), incluant de :

   - trouver les nouvelles conditions opérationnelles sur la base des équations de modèle identifiées (1),
   - entraîner le réseau à débit (F) auxdites nouvelles conditions opérationnelles en ajustant certaines ou toutes ou aucune des variables de processus d'entrée qui ne sont pas utilisées par la commande de processus et les valeurs cibles (points de consigne) de certaines ou toutes ou aucune des variables de processus commandées ou des dérivées de celles-ci, dans lequel lesdites variables de processus d'entrée sont les variables qui affectent les conditions opérationnelles, tels que des degrés d'ouverture de soupape (V), charge de pompage.

16. Procédé selon la revendication 15 pour l'optimisation du réseau à débit (F), lequel procédé consiste en outre d'estimer le biais de la (des) équations de modèle identifiées en utilisant les données de processus actuelles, dans lequel le biais est l'erreur systématique des équations de modèle en raison des perturbations du processus et/ou erreurs de modélisation dans des conditions opérationnelles inexplorées.

17. Procédé selon une quelconque des revendications 8 - 14 pour une commande adaptative du réseau à débit (F) incluant de :

   - substituer les valeurs actuelles des variables de processus et/ou des variables déduites de celles-ci auxdites équations identifiées (1) pour calculer informatiquement les gains des réponses des variables manipulées des contrôleurs des variables commandées, dans lequel un contrôleur est un dispositif ou un programme informatique qui surveille sa (ses) variables commandées et affecte les conditions opérationnelles du réseau à débit en ajustant les valeurs de la (des) variables manipulées du contrôleur,
- ajuster les paramètres de tous ou certains ou aucun des contrôleurs, qui ne reposent pas sur un modèle de processus, incluant les contrôleurs d'alimentation préventive, les contrôleurs proportionnels, les contrôleurs intégraux proportionnels, les contrôleurs à dérivée intégraux proportionnels, dans lequel les paramètres desdites contrôleurs sont mis à jour selon les valeurs actuelles desdits gains des réponses des variables manipulées sur les variables contrôlées,
- ajuster tous ou certains ou aucun des contrôleurs basés sur modèle, incluant des contrôleurs prédictifs de modèle, en mettant à l'échelle les modèles utilisés par lesdits contrôleurs selon lesdits gains des réponses des variables manipulées des contrôleurs sur leurs variables commandées.

18. Procédé selon une quelconque des revendications précédentes, dans lequel le réseau à débit (F) est le réseau de vapeur d'eau de la section de séchage d'une machine à papier ou carton contenant des soupapes de commande (V).

19. Moyen lisible par ordinateur contenant un support de mémorisation lisible par ordinateur comprenant des instructions pour amener un système de traitement de données à mettre en oeuvre un procédé, **caractérisé en ce que** ledit procédé est selon une quelconque des revendications précédentes à utiliser pour détecter des défaillances ou commander et/ou optimiser un réseau à débit commandé par des soupapes (V) u un réseau à débit (F) avec une(des) réactions chimiques ou une partie de celui-ci.

Figure 1.General scheme of different supervision methods with fault management, Isermann (2006).

The set of basis functions for a grid with five nodes

Figure 2. The set of piecewise linear basis functions for a grid with five nodes.

Figure 3. Simplified scheme of the steam-water network of the drying section.

Figure 4. Estimation of the flow rate through a valve

Figure 5. The equation related to the mass balance of 10 bar steam feed flow.

Figure 6. The equation realted to the mass balance of 5 bar steam feed flow.

Figure 7. The equations related to the mass balance of steam group 8 (left) and 7 (right).

Figure 8. The equations related to the mass balance of steam group 4 (left) and 3 (right).

Figure 9. Diagram of the condensate outflow from condensate Tank 5.

Figure 10. Comparison of the monotonous and non-monotonous models of the condensate valve of steam group 4.

The non-flattened model of the pressure valve of steam group 7

The flattened model of the pressure valve of steam group 7

Figure 11. Comparison of the non-flattened and the flattened model of the valve placed before steam group 7

Figure 12. Equations related to the mass balances of 5 bar steam feed flow (up) and steam group 3 (bottom)

Figure 13. Flowchart for process optimization

Figure 14. Flowchart for the adaptive control method according to the invention

```
┌─────────────────────────────────────┐
│  Design of the initial structure of a process.  │
│  Specify the equipment sizing and parameters     │
└─────────────────────────────────────┘
                    │
                    ▼
┌─────────────────────────────────────┐
│  Develop a nonlinear static model of the process  │◄──────────────┐
└─────────────────────────────────────┘                │
                    │                                    │
                    ▼                                    │
┌─────────────────────────────────┐   ┌──────────────────────────────┐
│  Optimization of the process operational │   │  Changing the process structure and the │
│           conditions             │   │   parameters of the equipement  │
└─────────────────────────────────┘   └──────────────────────────────┘
                    │                                    ▲
                    ▼                                    │
┌─────────────────────────────────┐                     │
│  Evaluation of the process capacity and │─────────────────────┘
│  bottlenecks. Evaluation of the control capacity. │
└─────────────────────────────────┘
```

Figure 15. Flowchart for the optimization of the plant structure

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20080071394 A

**Non-patent literature cited in the description**

• **HUI CHENG et al.** *Application of the Enhanced Dynamic Causal Digraph Method on a Three-layer Board Machine,* 01 May 2011, vol. 19 (3), 644-655